(19) Europäisches Patentamt
European Patent Office
Office européen des brevets

(11) **EP 3 362 773 B1**

(12) **EUROPEAN PATENT SPECIFICATION**

(45) Date of publication and mention
of the grant of the patent:
**06.03.2024 Bulletin 2024/10**

(21) Application number: **15820894.2**

(22) Date of filing: **16.10.2015**

(51) International Patent Classification (IPC):
**G01M 17/007** *(2006.01)* **G01M 17/08** *(2006.01)*
**G01M 17/10** *(2006.01)*

(52) Cooperative Patent Classification (CPC):
**G01M 17/08; G01M 17/007; G01M 17/10**

(86) International application number:
**PCT/IT2015/000255**

(87) International publication number:
**WO 2017/064734 (20.04.2017 Gazette 2017/16)**

(54) **METHOD FOR DETERMINING THE MODAL PARAMETERS OF ROAD OR RAIL VEHICLES AND FOR THE INDIRECT CHARACTERIZATION OF ROAD OR RAIL PROFILES**

VERFAHREN ZUR BESTIMMUNG DER MODALEN PARAMETER VON STRASSEN- ODER SCHIENENFAHRZEUGEN UND ZUR INDIREKTEN CHARAKTERISIERUNG VON STRASSEN- ODER SCHIENENPROFILEN

PROCÉDÉ POUR LA DÉTERMINATION DES PARAMÈTRES MODAUX DE VÉHICULES ROUTIERS OU FERROVIAIRES ET POUR LA CARACTÉRISATION INDIRECTE DE PROFILS ROUTIERS OU FERROVIAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.08.2018 Bulletin 2018/34**

(73) Proprietor: **Politecnico di Bari**
**70126 Bari (IT)**

(72) Inventors:
• **DE FILIPPIS, Giovanni**
**74020 Leporano (TA) (IT)**
• **MANGIALARDI, Luigi**
**70125 Bari (BA) (IT)**

• **PALMIERI, Davide**
**74027 San Giorgio Ionico (TA) (IT)**
• **SORIA, Leonardo**
**70122 Bari (BA) (IT)**

(74) Representative: **Trupiano, Federica et al**
**Marietti, Gislon e Trupiano S.r.l.**
**Via Larga, 16**
**20122 Milano (IT)**

(56) References cited:
**EP-A1- 1 600 755      EP-A2- 0 971 217**
**WO-A1-2007/009460      DE-A1- 10 257 793**
**US-A- 5 614 670**

**Description**

The present invention according to claim 1 relates to a method for the estimation of modal parameters of road/rail vehicle systems in working conditions and for the indirect characterization of statistic properties of roughness of rolling profiles on road/rail surfaces.

It is to be précised preliminarily that the method described in the following can be applied either to road or rail vehicle systems and that, therefore, the terms road surface and rail surface, road profile and rail profile, road and rail or railway are to be intended interchangeable throughout the text.

For an explanation of all the acronyms used, see the list at the end of the description.

**TECHNICAL FIELD**

The application fields of the present invention are the Operational Modal Analysis, OMA, applied in case of road/rail vehicle systems and the characterization of roughness profiles of road/rail surfaces.

OMA is a technique commonly used to carry out the experimental identification of structures in working conditions and is based on the analysis of the sole output signals, generally acquired by using accelerometers. The experimental identification of a linear system with N degrees of freedom, subjected to working loads, aims at the estimation of so-called operational modal parameters, i.e.:

- systems poles $\lambda_n$ ;

- modal vectors $\boldsymbol{\psi}_n \in \mathbb{C}^{N \times 1}$ ;

- operational reference vectors $\boldsymbol{\phi}_n \in \mathbb{C}^{N \times 1}$ .

In particular, the determination of the system poles $\lambda_n$ is crucial since they contain information about natural frequencies $\omega_n$ and damping ratios $\zeta_n$ of the system examined

$$\lambda_n = \left(-\zeta_n + i\sqrt{1-\zeta_n^2}\right)\omega_n \quad \text{with} \quad n = 1, \ldots, N \tag{1}$$

For characterization of the road/rail surface profiles it is intended the determination of the statistic properties associated to their roughness. Such characterization is generally carried out starting from direct measurements, carried out by means of suitable profilometers, and is aimed at a classification of the profiles belonging to various road surfaces or various rail elements.

**STATE OF THE ART**

*Operational modal analysis*

At the state of the art there are known various methods which allow to obtain the estimation of the modal parameters of structural systems starting from the analysis of the sole output signals, in case the hypotheses of natural excitation technique, NExT, are satisfied. In the separation domain (time-lag) ($\tau$) the output auto- and cross-correlation functions $R_{q_i q_j}(\tau)$ (Eq. (3)) are commonly used. In the frequency domain ($\omega$) instead, the modal parameters can be estimated directly from the auto- and cross-power spectral density, PSD, of the outputs $S_{q_i q_j}(\omega)$, (Eq. (4)). In case in which $N_i$ external loads satisfy the NExT hypotheses, the input PSD matrix $S_f$ can be written as a diagonal matrix with constant elements (eq. (2)).

$$\boldsymbol{S}_f = \begin{bmatrix} S_1 & & 0 \\ & \ddots & \\ 0 & & S_{N_i} \end{bmatrix} \in \mathbb{C}^{N_i \times N_i} \tag{2}$$

The above cited NExT hypotheses are in fact:

hypothesis 1: the loads acting on the system have to have a pattern which can be traced back to a sequence of white noises (amplitude independent of the frequency in eq. (2));
hypothesis 2: in case in which the excitation acts on many points, the **inputs** have to be strictly uncorrelated (absence of extra-diagonal elements in eq. (2)).

Referring to a generic system with $N$ degrees of freedom, subjected to external loads which satisfy the NExT hypotheses, and considering the outputs $q_i$ and $q_j$, we can write the expression of the cross-correlation as [Shen, DOI:10.1006/jsvi.2002.5203]

$$R_{q_i q_j}(\tau) = \sum_{n=1}^{2N} \phi_{in} \psi_{jn} e^{\lambda_n \tau} h(\tau) + \psi_{in} \phi_{jn} e^{-\lambda_n \tau} h(-\tau) \qquad (3)$$

wherein:

- $\psi_{in}$ and $\psi_{jn}$ are two generic components of the modal vector $\psi_n$;
- $\phi_{in}$ and $\phi_{jn}$ are two generic components of the operational vector $\phi_n$;
- $h(.)$ indicates the Heaviside function.

As a consequence, the cross-PSD expression can be obtained from eq. (3) by applying the Fourier transform

$$S_{q_i q_j}(\omega) = \sum_{n=1}^{2N} \frac{\phi_{in} \psi_{jn}}{i\omega - \lambda_n} + \frac{\psi_{in} \phi_{jn}}{-i\omega - \lambda_n} \qquad (4)$$

Finally, re-writing eqs. (3) and (4) in compact matrix form, it is obtained:

$$\boldsymbol{R}_q(\tau) = \sum_{n=1}^{2N} \boldsymbol{\phi}_n \boldsymbol{\psi}_n^T e^{\lambda_n \tau} h(\tau) + \boldsymbol{\psi}_n \boldsymbol{\phi}_n^T e^{-\lambda_n \tau} h(-\tau) \qquad (5)$$

$$\boldsymbol{S}_q(\omega) = \sum_{n=1}^{2N} \frac{\boldsymbol{\phi}_n \boldsymbol{\psi}_n^T}{i\omega - \lambda_n} + \frac{\boldsymbol{\psi}_n \boldsymbol{\phi}_n^T}{-i\omega - \lambda_n} \qquad (6)$$

wherein:

- $\boldsymbol{R}_q(\tau) \in \mathbb{R}^{N \times N}$ is the output correlation matrix;
- $\boldsymbol{S}_q(\omega) \in \mathbb{C}^{N \times N}$ is the output PSD matrix;
- the symbol $(.)^T$ indicates the transpose operator matrix.

In particular, by grouping the various terms, eq. (6) can be re-written in more generic form as ratio between polynomial functions [Reynders, DOI: 10.1007/s1 1831-012-9069-x]

$$S_q(\omega) = \frac{\boldsymbol{B}(\omega)}{A(\omega)} \qquad (7)$$

where:

- $\boldsymbol{B}(\omega) \in \mathbb{C}^{N \times N}$ represents a matrix, whose generic element $B_{ij}(\omega) = \sum_{r=0}^{n_b} (i\omega)^r b_{ijr}$ is the numerator polynomial of the corresponding PSD having coefficients $b_{ijr}$; the polynomials $B_{ij}(\omega)$ are here defined as fitting polynomials and result associated to the inputs;

- $A(\omega) = \sum_{r=0}^{n_a} (i\omega)^r a_r$ is the denominator polynomial common to all the PSDs, having coefficients $a_r$; it represents

the characteristic polynomial, whose roots are the system poles;

- $n_b$ and $n_a$ indicate the number of coefficients of the numerator and denominator polynomials, respectively.

The NExT hypotheses, for which eqs. (5), (6) and (7) are valid, are generally satisfied in civil engineering applications (buildings, bridges, civil structures in general), since in most cases the great constructions are exposed to stochastic loads (traffic and wind), which easily satisfy such hypotheses.

In the following, the main contributions available in Patent literature are described.

The application WO 01/33182 A1 describes the just introduced method for operational modal identification based on NExT hypotheses.

The application WO 2008/002310 A1 refers to a method for the extraction of modal parameters starting from FRFs. In order to obtain such functions it is needed to excite the structure with known signals. On the contrary, the OMA techniques do not require the inputs to be measured.

The application WO 2014/006176 A1 introduces a method for the estimation of the modal parameters of a structure, based on the use of transmissibilities. Such functions are obtained as ratio between two outputs of the system in a determined working condition. To eliminate the input influence is also needed to consider at least two different working conditions.

*Characterization of roughness profiles of road/rail surfaces*

In the last decades, the properties of random processes (random fields) have been widely studied and as a consequence the use of various approaches in modelling the road/rail roughness have emerged [Dodds&Robson, DOI:10.1016/S0022-460X(73)80373-6]. In particular, underlying such models are three fundamental hypotheses.

Hypothesis 3: the surface is homogeneous, i.e. the statistic properties of roughness are independent of the spatial observation considered while referring to more parallel profiles;

hypothesis 4: the heights of roughness have a Gaussian distribution with null average, hence the statistic properties can be completely described by means of the correlation functions or by means of PSDs;

hypothesis 5: the surface is an ergodic process, i.e. the simple average, computed along the single realization, coincides with the ensemble average, computed along all the realizations.

In this contest, the technical literature suggests various approximations, the most part of which is based on the use of parametric models of measured PSDs. The parameters concerning such approximations are computed, starting from the acquired data, by using suitable fitting techniques. For example, the norm ISO 8608-1995 proposes the following auto-PSD model, defined in the domain of spatial frequency $v$

$$S_{d(ISO)}\left(v\right) = S_0 \left(\frac{v}{v_0}\right)^{-e} \tag{8}$$

where:

- $v_0$ indicates the spatial frequency of reference ($v_0$ = 1 rad/m)
- $S_0$ (m$^3$) is the amplitude of PSD for $v = v_0$.

The norm suggests to have the exponent $e$ equal to 2 in case the data are acquired at constant speed. Therefore, if it is considered a profilometer which advances at a given speed v , the expression of eq. (8) can be converted in the time frequency domain $\omega$ and be re-written as

$$S_{d(ISO)}\left(\omega\right) = S_{d(ISO)}\left(v = \omega / v\right) / v = \frac{S_0}{v} \left(\frac{\omega}{\omega_0}\right)^{-e} \tag{9}$$

where $\omega_0 = v_0 v$ (product between the spatial frequency of reference and the speed v) indicates the frequency of reference. It is to be noted how, in this example, the sole parameter which has to be fitting-determined results to be the amplitude $S_0$.

Another approximation, commonly used both for road and rail applications, easily usable since it requires the estimation of only two parameters, is the one proposed by Sussman [Andrén, DOI:10.1504/IJVD.2006.008450]. In the

time-frequency domain $\omega$ , the pattern of the auto-PSD results to be

$$S_{d(Sus)}\left(\omega\right) = \frac{c}{\omega^2 + \omega_0^2} \tag{10}$$

where c ($m^2$rad/s) and $\omega_0$ (rad/s) are the unknown values to be determined.

In case in which the characterization concerns more parallel profiles, belonging to the same road surface or the two rails belonging to the same railway, the coherence function $\Gamma_{ij}$ (v) can be used to describe the relation therebetween. By considering two generic parallel profiles $d_i$ (x) and $d_j$ (x) posed at distance $W_m$ and defined in function of the spatial abscissa x, such function can be computed by using the following formula:

$$\Gamma_m\left(v\right) = \frac{\left|S_{d_i d_j}\left(v\right)\right|}{\sqrt{S_{d_i}\left(v\right)S_{d_j}\left(v\right)}} \tag{11}$$

where the m-th trackwidth is the one individuated by the parallel profiles $d_i$ (x) and $d_j$ (x) and measures specifically the distance between such profiles. Moreover,

- $S_{d_i}$ (v) and $S_{d_j}$ (v) are respectively the auto-PSDs associated to the profiles $d_i$ (x) and $d_j$ (x);
- $S_{d_i d_j}$ (v) is the cross-PSD computed between the profiles $d_i$ (x) and $d_j$ (x).

It derives therefrom that the cross-PSD can be obtained as

$$S_{d_i d_j}\left(v\right) = \Gamma_m\left(v\right)\sqrt{S_{d_i}\left(v\right)S_{d_j}\left(v\right)}e^{-i\beta_m\left(v\right)} \tag{12}$$

where $\beta_m$ (v) is the difference between the phases associated to the spectra of the two profiles $d_i$ (x) and $d_j$ (x). As a definition, the coherence is an even real function ($\Gamma_m(v) = \Gamma_m(-v)$) whose value can be between 0 and 1. As a consequence, two profiles result to be very similar with respect to each other only for such spatial frequencies that the coherence assumes values close to unit. Moreover, by bringing to zero the distance $W_m$ between the two profiles, the coherence $\Gamma_m$ (v) becomes clearly unitary. Studies carried out on different kinds of road/rail surfaces have shown how, in many cases, the coherence has a decreasing pattern in function of the spatial frequency V . The fitting model proposed by Bogsjö [Bogsjö, DOI:10.1080/00423110802018289] agrees well with such observations since it is based on the use of a decreasing exponetial function with only one parameter $\mu$ , according to the following relation

$$\Gamma_m\left(v\right) = e^{-\mu W_m |v|} \tag{13}$$

Finally, it is to be remembered that since $\Gamma_m$ (v) is a dimensionless unit, the relations reported in eqs. (11) and (13) can be converted in the time frequency domain $\omega$ applying the substitution v = $\omega$ / v . Recently, the indirect characterization of the statistic properties of the road/rail surface profiles has had an increasing interest both in technical and Patent literature.

In particular, Gonzáles et al. [Gonzáles, DOI:10.1080/00423110701485050] propose a method for the indirect estimation of the auto-PSD of the road profile, in which the whole vehicle is considered in motion on a single profile. By knowing the matrix of FRFs of the vehicle, it is possible to reconstruct the auto-PSD of the profile starting from the sole accelerations detected on the same vehicle.

The application US 2014/257629 A1 describes a method to allow the estimation of the road profile starting from the vibrations measured upstream and downstream of one or more suspensions. Such method uses an algorithm based on an adaptive Kalman filter and referred to a mono-suspension model of vehicle. The application US 2014/204205 A1 proposes a method for measuring the height of the road profiles on which a vehicle moves. Such method makes extensive use of the image processing techniques and requires the use of one or more cameras (for example cameras for traffic monitoring) arranged on the road level.

The methods proposed in the railway field are generally limited to detect the presence of faults of the rail and do not use algorithms of estimation to characterize the roughness statistic properties.

The application US 799988B2 describes a method for monitoring the railway network by means of at least a camera arranged on a rail vehicle. By means of algorithms of image controlling and modification it is possible to monitor the railway network and, above all, to detect the presence of possible anomalies on the same network.

The application US 8905359 B2 describes a method for detecting rail damage. By using two accelerometers which measure the vertical and longitudinal acceleration of the axle respectively, it is possible to create a database of accelerometric signals. Possible damage can be identified as deviations between signals acquired in different times on the same railway section.

The application US 8942426 B2 describes a method for monitoring the railway network in real time, by using cameras and GPS. The measurements are processed in real time to control if they respect criteria of irregularity presence of the railway network. If present, the data are sent automatically to a control centre to determine the kind of such irregularities. DE 102 57 793 A1 discloses a method based on a predictive simulation model for service life monitoring of a motor vehicle,

EP 1 600 755 A1 discloses a device for simulation of vibrations, to be used with an internal combustion engine test bench.

US 5 614 670 A discloses a device and method for monitoring conditions associated with pavement deterioration which uses pneumatic hammers to excitate road pavements.

EP 0 971 217 A2 discloses a noise diagnosing system and method for diagnosing unexpected noise in a multicomponent assembly.

WO 2007/009460 A1 discloses a method for testing an object with respect to its vibration modes provided at a selected excitation location and measured by vibration sensitive sensors.

## TECHNICAL PROBLEM

In the specific case of OMA applied to a vehicle system, object of the present invention, it is certainly needed to verify if the following hypothesis of stationarity is satisfied:

hypothesis 6: the vehicle has to proceed in stationary running condition, i.e. at constant speed along a rectilinear trajectory or bend with constant radius, i.e. which does not imply abrupt variations of direction.

In these conditions, the vehicle is mainly subjected to stationary external loads, produced by the interactions existing between wheels and road/railway. Since, generally, the inputs applied to the system remain unknown, the operational modal analysis can be used to identify its modal parameters.

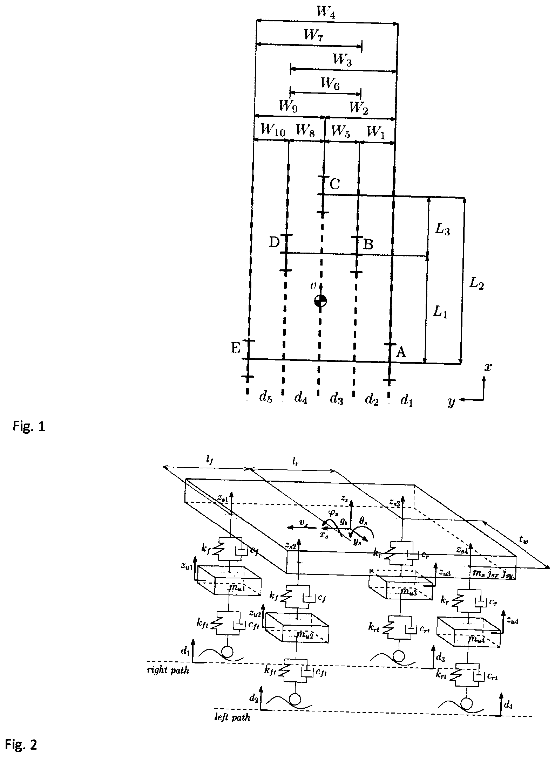

Let consider for example the vehicle described in fig. (1) having a number of wheels $N_t = 5$. The geometry was defined in such a way that it is general, thus resulting as being characterized by the presence of 10 trackwidths $W_m$ and 3 different wheelbases $L_l$. In case in which the vehicle moves on 5 profiles $d_1(x),...,d_5(x)$ in condition of stationary running with speed $v$, the external loads are transmitted to the system through each single wheel. For easiness, in order to describe its interactions with the rolling surface it is possible to consider a contact of punctiform kind. Since, in reality, the footprints act a slow-pass filter on the **inputs,** this mode of description can be introduced without loosing generality. If the hypotheses 3 to 6 were verified, the PSD matrix $S_r(\omega)$, referred to the **displacements** induced by the surface, on the wheels, in the respective contact points (indicated in fig. 1 with letters A to E) could be defined in the time frequency domain $\omega$ as

$$S_r(\omega) = \begin{bmatrix} S_{d_A} & S_{d_A d_B} & \cdots & S_{d_A d_E} \\ S_{d_A d_B}^* & S_{d_B} & & \vdots \\ \vdots & & \ddots & \vdots \\ S_{d_A d_E}^* & \cdots & \cdots & S_{d_E} \end{bmatrix} \in \mathbb{C}^{N_t \times N_t}$$

$$= \begin{bmatrix} S_{d_1} & \Gamma_1 \sqrt{S_{d_1} S_{d_2}} e^{+i(\omega\tau_1 - \beta_1)} & \Gamma_2 \sqrt{S_{d_1} S_{d_3}} e^{+i(\omega\tau_2 - \beta_2)} & \Gamma_3 \sqrt{S_{d_1} S_{d_4}} e^{+i(\omega\tau_1 - \beta_3)} & \Gamma_4 \sqrt{S_{d_1} S_{d_5}} e^{-i\beta_4} \\ S_{d_A d_B}^* & S_{d_2} & \Gamma_5 \sqrt{S_{d_1} S_{d_3}} e^{+i(\omega\tau_3 - \beta_5)} & \Gamma_6 \sqrt{S_{d_2} S_{d_4}} e^{-i\beta_6} & \Gamma_7 \sqrt{S_{d_2} S_{d_5}} e^{-i(\omega\tau_1 + \beta_7)} \\ \vdots & & S_{d_3} & \Gamma_8 \sqrt{S_{d_3} S_{d_4}} e^{-i(\omega\tau_3 + \beta_8)} & \Gamma_9 \sqrt{S_{d_3} S_{d_5}} e^{-i(\omega\tau_2 + \beta_9)} \\ \vdots & & & S_{d_4} & \Gamma_{10} \sqrt{S_{d_4} S_{d_5}} e^{-i(\omega\tau_1 + \beta_{10})} \\ S_{d_A d_F}^* & \cdots & \cdots & \cdots & S_{d_5} \end{bmatrix}$$

$$(14)$$

where $\tau_l = L_l / v$ with $l = 1,...,3$ indicates the generic lag between two axles, and for the sake of brevity, the dependence of $S_{d_i}$, $\Gamma_m$ and $\beta_m$ on $\omega$ has been omitted. By indicating with $\boldsymbol{H}_{fr}(\omega) \in \mathbb{C}^{N_i \times N_t}$ the matrix of the frequency response functions (FRF) of the wheels, the input PSD matrix $S_f(\omega)$, represented by the forces acting on the stocks, can be computed as

$$S_f(\omega) = \boldsymbol{H}_{fr}^*(\omega) S_r(\omega) \boldsymbol{H}_{fr}^T(\omega) \tag{15}$$

Comparing the expressions of the input PSD matrix obtained by considering the natural excitation (eq. (2)) and the one due to the interaction with the rolling surface (eq. (15)), it is clear how the modal identification techniques deriving from the NExT hypotheses, and therefore based on the eqs. (5), (6) and (7), do not result valid in cases in which OMA is applied to vehicles in working condition. In fact:

**problem 1**: the loads have a pattern which can be traced back to the one of the coloured noise, with an amplitude generally decreasing with frequency, whose form depends on the characteristics of the road/rail profile (eqs. (9) and (10)) and on the ones of the wheels (described by means of $\boldsymbol{H}_{fr}(\omega)$ in eq. (15)): therefore the hypothesis 1 of NExT is not valid.

**Problem 2:** the **inputs** acting on the wheels positioned on the same axle are interested by spatial correlation (described by means of $\Gamma_m(\omega)$ in eq. (14)), the inputs applied on wheels having the rolling profile in common but arranged on different axles are interested by time correlation (described by means of $e^{\pm i\omega\tau_l}$ in eq. (14)), while for the loads relating wheels with no rolling profile in common and belonging to different axles there is both a spatial and time correlation: therefore, the hypothesis 2 of NExT is not valid.

Therefore, the errors made in the estimation process by using models formulated according to the NExT hypotheses, increase remarkably. Moreover, to compensate errors of modelling, caused by the failed satisfaction of the NExT hypotheses, the known algorithms of identification introduce additional solutions which do not have physical meaning and which are provided in form of poles/spurious modes in the set of estimated modal parameters, which are difficult, if not impossible to be individuated and excluded. Therefore, a technical problem unsolved by the identification methods known at the state of the art, is to carry out the modal identification of a system also when this is subjected to "coloured" and correlated in time and space loads.

Therefore, a first aim of the present invention is to provide a method for the estimation of modal parameters of vehicles in working conditions, which considers explicitly the effects that the colouring and correlation of **inputs** have on the outputs of the system.

Referring to the indirect characterization of the road/rail surface profiles, the above-described methods and all the others known at the state of the art do not consider explicitly the effects of the correlation of the **inputs** on the outputs of the vehicle system. The method proposed by Gonzáles et al. [Gonzáles, DOI: 10.1080/00423110701485050] needs in fact a calibration step, needed to determine the matrix of FRFs of the vehicle in various working conditions, i.e. considering various travel speeds on a road surface with known features. The application US 2014/257629 A1 instead, proposes a method based on a mono-suspension model of vehicle which does not allow to consider properly the effects linked to the correlation of the road **inputs.**

Since the cameras are mounted on a fixed structure (and not on vehicles), the method described in the application US 2014/204205 A1 allows to reconstruct only the height of the profiles in the area covered by the angles of sight of the same cameras. In the railway field, the applications US 799988B2, US 8905359 B2 and US 8942426 B2 are limited to detect the presence of faults of the rail and do not use algorithms of estimation to characterize the statistic properties of roughness.

Therefore, according to another aim, the present invention provides a method for indirect characterization of the statistic properties of the road/rail surface profiles starting from the output signals acquired on vehicles in working conditions. In particular, by exploiting some intrinsic properties of homogeneity, the method proposed allows to reduce remarkably the number of quantities which it is needed to be estimated to characterize the statistic properties of parallel profiles belonging to the same rolling surface. Furthermore, the present invention provides a program according to claim 8 and a system according to claim 9.

## BRIEF DESCRIPTION OF THE INVENTION

The present invention provides a method for the identification of the poles () and modal vectors ($\psi_n$) of a road or rail vehicle provided with at least two wheels and in working condition, by means of the analysis of the **displacements** or **velocities** or accelerations (output of the system) acquired in assigned measuring points of said vehicle, wherein said modal parameters are determined by means of the fitting of the data relating to said outputs of the system on the basis of a mathematical model which describes the interaction between road or railway and said vehicle, characterized by:

- hypothesizing that said vehicle moves at constant speed on a rectilinear trajectory or bend with constant radius;
- hypothesizing that said vehicle moves on a homogeneous and ergodic surface, whose roughness has a Gaussian distribution and that said at least two wheels move on a profile or on a plurality of profiles parallel with respect to each other;
- hypothesizing that the **inputs** induced by the road or rail surface on said vehicle cannot be traced back to a sequence of white noises and are correlated with respect to each other in time and/or space.

Moreover, the present invention provides a method for the estimation of operational vectors ( $\alpha_n^m$ , $\beta_n^{ml}$ and $\chi_n^{ml}$ ) and for the indirect characterization of the statistic properties of a road or rail surface obtained by using:

- the auto-correlation function ($R_d(\tau)$) or auto-PSD ($S_d(\omega)$) associated to road or rail profiles;

- the coherence functions ($\Gamma_m(\omega)$) or respective IFTs ($\eta_m(\tau)$) associated to parallel road or rail profiles.

## DETAILED DESCRIPTION OF THE INVENTION

In fig. (1) it is shown the geometry of a vehicle with 5 wheels and having 10 trackwidths and 3 different wheelbases.

In fig. (2) it is shown a schematized model of vehicle as system with 7 degrees of freedom.

In figs. (3.a) and (3.b) there are shown, respectively, the stabilization diagrams obtained by applying the procedure of identification according to the invention and the Least Square Complex Frequency domain (LSCF) algorithm to a model of vehicle with 7 degrees of freedom, in motion at constant speed (60 km/h) on a homogeneous and Gaussian surface.

In fig. (4) it is shown a validation diagram of the synthetized model by using the proposed procedure of identification.

In figs. (5) to (8) there are shown some flowcharts explaining the method according to the present invention.

## EP 3 362 773 B1

### Basic hypothesis of the method

The method for the modal identification of vehicles according to the present invention needs that all the hypotheses 3 to 6 are satisfied, but does not require that the NExT hypotheses 1 and 2 are satisfied: in other words, it is supposed that the surface is homogeneous and assimilable to an ergodic process, that roughness has a Gaussian distribution with null average and that the vehicle proceeds at constant speed along a rectilinear trajectory or bend with constant radius. But it is hypothesized that the loads acting on the vehicle have a pattern which can be traced back to the coloured noise and are interested by time and/or space correlation. In particular, as it is explained in the following, the knowledge of the geometry of the vehicle, intended as knowledge of trackwidths and wheelbases, allows to include information concerning the time and/or spatial correlation of the **inputs** in the modal identification method. This allows to determine the modal parameters of the vehicle and the characteristic parameters of the road/rail also in case in which the NExT hypotheses are not satisfied.

### Description of the method

In case in which a given road or rail surface can be assimilated to a homogeneous Gaussian random field, the number of quantities needed to characterize the statistic properties associated to parallel profiles belonging thereto can be remarkably reduced. To such end, it is possible to exploit important intrinsic properties of homogeneity:

**property** 1: $S_{d_i}(v) = S_{d_j}(v) = S_d(v)$, the auto-PSDs associated to the profiles $d_i(x)$ and $d_j(x)$ are coincident, and therefore they can be considered equal to a function $S_d(v)$ ;
**property** 2: $S_{d_i d_j}(v) = \Gamma_m(v)S_d(v)$ the cross-PSD computed between the profiles $d_i(x)$ and $d_j(x)$ is a real function which depends exclusively on the auto-PSD $S_d(v)$ and on the coherence function $\Gamma_m(v)$.

Therefore, the PSD matrix of eq. (14), referred to the **displacements** induced by the surface on the wheels, can be re-written in the domain of time frequency $\omega$ , as:

$$S_r(\omega) = S_d(\omega) \begin{bmatrix} 1 & \Gamma_1(\omega)e^{+i\omega\tau_1} & \Gamma_2(\omega)e^{+i\omega\tau_2} & \Gamma_3(\omega)e^{+i\omega\tau_1} & \Gamma_4(\omega) \\ \Gamma_1(\omega)e^{-i\omega\tau_1} & 1 & \Gamma_5(\omega)e^{+i\omega\tau_3} & \Gamma_6(\omega) & \Gamma_7(\omega)e^{-i\omega\tau_1} \\ \vdots & & 1 & \Gamma_8(\omega)e^{-i\omega\tau_3} & \Gamma_9(\omega)e^{-i\omega\tau_2} \\ \vdots & & & 1 & \Gamma_{10}(\omega)e^{-i\omega\tau_1} \\ \Gamma_4(\omega) & \cdots & \cdots & \cdots & 1 \end{bmatrix} \quad (16)$$

Knowing the geometry of the vehicle, in terms of trackwidths $W_m$ and wheelbases $L_l$ it is possible to compute the number of quantities to be known for the whole determination of the coefficients of the PSD matrix of eq. (16):

- the number of auto-PSDs is limited to a single function $S_d$ ;
- the number of coherence function $\Gamma_m$ coincides with the number of trackwidths $N_W$ ;
- the number of lags $\tau_l$ coincides with the number of wheelbases of different length $N_L$ .

With reference to the generic vehicle system of fig. (1), the input correlation matrix $R_f(\tau) \in \mathbb{R}^{N_i \times N_i}$ can be computed by applying the IFT to the expression of eq. (15); the output correlation matrix $R_q(\tau) \in \mathbb{R}^{N \times N}$ can be obtained by expressing firstly the response to the system to the action of arbitrary external loads, in the time domain, by using the so-called Duhamel's integral:

$$q(t) = \int_{-\infty}^{t} h(t-\rho)f(\rho)\,\mathrm{d}\rho \quad (17)$$

Wherein $h(t) \in \mathbb{R}^{N \times N}$ is the matrix of the response functions to the impulse, $q(t) \in \mathbb{R}^{N \times 1}$ is the output

9

vector, $f(t) \in \mathbb{R}^{N \times 1}$ is the vector of the **inputs,** and by obtaining then the expression of the generic output cross-correlation function $R_{q_iq_j}(\tau)$, considering two generic outputs $q_i$ *(t)* and $q_j$ *(t)*. Such function comprises the parameters characteristic of the system dynamics (i.e. the modal parameters) and depends on the matrix $\boldsymbol{R}_f(\tau)$.

It is specifically possible to demonstrate that the output correlation matrix $R_q(\tau)$ can be obtained in the following form:

$$R_q(\tau) = \sum_{n=1}^{2N} \overline{\boldsymbol{\varphi}}_n(\tau) \psi_n^T e^{\lambda_n \tau} + \psi_n \overline{\boldsymbol{\varphi}}_n^T(-\tau) e^{-\lambda_n \tau} \tag{18}$$

Where the terms $\overline{\boldsymbol{\varphi}}_n(\tau) \in \mathbb{C}^{N \times 1}$ are lag-dependent operational reference vectors and are defined as

$$\overline{\boldsymbol{\varphi}}_n(\tau) = R_d(\tau) * \left( \sum_{m=0}^{N_W} \eta_m(\tau) * \left( \boldsymbol{\alpha}_n^m h(\tau) + \sum_{l=1}^{N_L} \left( \boldsymbol{\beta}_n^{ml} e^{+\lambda_n \tau_l} h(\tau + \tau_l) + \boldsymbol{\chi}_n^{ml} e^{-\lambda_n \tau_l} h(\tau - \tau_l) \right) \right) \right) \text{ with } \eta_0(\tau) = 1 \tag{19}$$

Where

- $R_d(\tau)$ is the function of auto-correlation associated to the profiles and can be computed by means of the Inverse Fourier Transform, IFT, starting from $S_d(\omega)$;
- $\eta_m(\tau)$ with $m$ = 1, ..., $N_W$ is the IFT of the coherence function $\Gamma_m(\omega)$ computed between the profiles $d_i$ and $d_j$ arranged at distance $W_m$;
- $\boldsymbol{\alpha}_n^m$, $\boldsymbol{\beta}_n^{ml}$ and $\boldsymbol{\chi}_n^{ml} \in \mathbb{C}^{N \times 1}$ are the operational vectors.

As a consequence, the expression of the output PSD matrix $S_q(\omega)$ can be obtained by eq. (18) by applying the Fourier Transform

$$S_q(\omega) = \sum_{n=1}^{2N} \frac{\boldsymbol{\varphi}_n(\omega) \psi_n^T}{i\omega - \lambda_n} + \frac{\psi_n \boldsymbol{\varphi}_n^T(-\omega)}{-i\omega - \lambda_n} \tag{20}$$

Where the terms $\boldsymbol{\varphi}_n(\omega) \in \mathbb{C}^{N \times 1}$ are the frequency-dependent operational reference vectors and are defined as

$$\boldsymbol{\varphi}_n(\omega) = S_d(\omega) \left( \sum_{m=0}^{N_W} \Gamma_m(\omega) \left( \boldsymbol{\alpha}_n^m + \sum_{l=1}^{N_L} \boldsymbol{\beta}_n^{ml} e^{+i\omega\tau_l} + \boldsymbol{\chi}_n^{ml} e^{-i\omega\tau_l} \right) \right) \text{ with } \Gamma_0(\omega) = 1 \tag{21}$$

By grouping the various terms, eq. (20) can be re-written in more general form, as ratio between polynomial functions

$$S_q(\omega) = \frac{S_d(\omega) \left( \sum_{m=0}^{N_W} \Gamma_m(\omega) \left( \boldsymbol{B}^m(\omega) + \sum_{l=1}^{N_L} \left( \boldsymbol{C}^{ml}(\omega) e^{+i\omega\tau_l} + \boldsymbol{D}^{ml}(\omega) e^{-i\omega\tau_l} \right) \right) \right)}{A(\omega)} \text{ with } \Gamma_0(\omega) = 1$$

$$\tag{22}$$

Where

- $B^m(\omega)$, $C^{ml}(\omega)$ and $\boldsymbol{D}^{ml}(\omega) \in \mathbb{C}^{N \times N}$ represent matrices whose generic elements

$$B_{ij}^m(\omega) = \sum_{r=0}^{n_b}(\mathrm{i}\omega)^r b_{ijr}^m, \quad C_{ij}^{ml}(\omega) = \sum_{r=0}^{n_b}(\mathrm{i}\omega)^r c_{ijr}^{ml} \text{ and } D_{ij}^{ml}(\omega) = \sum_{r=0}^{n_b}(\mathrm{i}\omega)^r d_{ijr}^{ml}$$

are numerator polynomials of the corresponding PSD, having coefficients $b_{ijr}^m$, $c_{ijr}^{ml}$ and $d_{ijr}^{ml}$, respectively; the polynomials $B_{ij}^m(\omega)$, $C_{ij}^{ml}(\omega)$ and $D_{ij}^{ml}(\omega)$ are here called fitting polynomials and result to be associated to the inputs.

$$A(\omega) = \sum_{r=0}^{n_a}(\mathrm{i}\omega)^r a_r$$

- is the denominator polynomial, common to all the PSD, having coefficients $a_r$; it represents the characteristic polynomial whose roots are the system poles;
- $n_b$ and $n_a$ indicate the number of coefficients of numerator and denominator polynomials, respectively.

Therefore, it is clear that eqs. (18) to (22) contain a combination of various terms therein:

(i) $R_d(\tau)$ and $S_d(\omega)$ describe in the separation and frequency domain, respectively, the pattern of the statistic properties associated to the profiles;
(ii) $h(\tau \pm \tau_l)$ and $\mathrm{e}^{\pm \mathrm{i}\omega\tau_l}$ allow to include the effects of the time correlation existing between the **inputs** acting on the wheels having the rolling profile in common but arranged on different axles;
(iii) $\eta_m(\tau)$ and $\Gamma_m(\omega)$ model the effects of the spatial correlation existing between the **inputs** acting on wheels in motion on different profiles.

Finally, said equations underlie a new method for identification of vehicles in working conditions. Starting from these expressions, it is possible to develop specific procedures which allow the estimation of modal parameters of road/rail vehicle systems in working condition and the indirect characterization of statistic properties of the road/rail surface profiles. In particular, eqs. (18) to (19) can be used to set the algorithms operating in the separation domain.

As an alternative, according to a preferred embodiment of the invention, by using eqs. (20), (21) and (22) it is possible to implement fitting techniques able to exploit the advantages deriving from the analysis of the frequency domain.

*Procedure of identification in the frequency domain*

The procedure of identification, object of the present invention, requires that the geometry of the vehicle system is known in number and dimension of trackwidths and wheelbases. It is sufficient to measure the sole output signals. The measuring tools can concern various quantities, for example **displacements, velocities** or accelerations acquired in assigned measuring points of said vehicle. Even if it is known that, even using only one measuring tool, it is possible to identify all the modal parameters of the system, in order to obtain a suitable visual reconstruction of the modal forms and therefore, a good spatial resolution of the same, it is recommended to use a suitable number of sensors. A suitable experimental setup can be realized by positioning the sensors upwards or downwards of each suspension. To initialize the process of estimation it can be useful to detect the position and the speed of the vehicle on the tract covered by using for example a GPS sensor. Such information can allow to discriminate possible transitory zones during which the stationary running condition is not respected. Once the signals are acquired, the real data analysis step begins.

Even if the method according to the present invention can be applied also in the separation domain, by adopting a method working in the frequency domain at least three advantages are obtained: (1) minimum computational effort; (ii) clearer stabilization diagrams and (iii) capacity of the method to treat correctly strongly damped systems as the vehicle systems are generally.

The procedure of estimation according to this embodiment of the invention is divided in two steps:

- **step A:** estimation of the poles and modal vectors of the vehicle system;
- **step B:** estimation of the operational vectors and characteristic parameters of road/railway.

It is to be said that the step A, estimation of the poles and modal vectors of the vehicle, comprises the following steps:

A.1) estimation of one of more functions of the output PSD matrix $S_q(\omega)$ starting from the output signals measured on the basis of the polynomial model expressed by means of eq. (25) represented in the following;
**A.2)** estimation of the poles $\lambda_n$ and modal vectors $\psi_n$ by determining the auto-values and auto-vectors of the companion matrix associated to the characteristic polynomial of eq. (25).

The step B, estimation of operational vectors and characteristic parameters of road/railway, comprises the following steps:

> **B.1)** choice of the parametric model to be used to describe the auto-PSD associated to the road profiles $S_d(\omega)$ and, when present, the coherence functions $\Gamma_m(\omega)$ ;
>
> **B.2)** estimation of the operational vectors $\alpha_n^m$, $\beta_n^{ml}$ and $\chi_n^{ml}$, of the parameters of the auto-PSD associated to the road profiles $S_d(\omega)$ and, if required, of the parameters of the coherence functions $F_m(\omega)$ on the basis of the decomposition in simple fractions of one or more functions of the output PSD matrix $S_q(\omega)$ according to eqs. (26) to (34) represented in the following.

The procedure of identification of the modal parameters is described in the following in detail in single steps and with reference to the use of a polynomial basis function $\Omega_r(\omega)$. The polynomial function $\Omega_r(\omega)$ can be $\Omega_r(\omega) = (i\omega)^r$ for models in the continuous time domain and $\Omega_r(\omega) = (e^{i\omega T_s})^r$ for the models in discrete time domain, where $T_s$ indicates the sampling period.

*Step A: estimation of the poles and modal vectors of the vehicle system*

During step A, as above described, the poles $\lambda_n$ and modal vectors $\psi_n$ of the vehicle systems are determined starting from the sole output signals. The step A comprises the following two steps:
**A.1)** estimation of one or more functions of the output PSD matrix $S_q(\omega)$ starting from output signals measured on the basis of the polynomial model expressed by the following eq. (25).
The algorithms through which it is possible to determine output auto- and cross-PSD are parametric estimators, since they require the adoption of a data fitting model. In this contest, the parametric estimators can be divided in two kinds: (i) parametric estimators in the strict sense of the word: if the starting data on which the parametric estimator works are the measured signals;(ii) mixed parametric estimators: if the starting data on which the parametric estimator works are the non-parametric estimations of PSDs.
In particular, the non-parametric estimations of PSDs can be obtained starting from the theoretical definition of PSD, for example according to the Parseval's and Wiener-Khinchin's theorems. What usually differentiates such estimators is the domain of the data on which they work and the windows used in order to reduce the estimation errors, for example, the leakage. Welch's Weighted Periodogram Method and Correlogram Method are to be mentioned among the most diffused techniques in the contest of OMA.
In particular, in the method according to the present invention, a simplification of the polynomial model of eq. (22) is obtained by describing the pattern of the auto-PSD associated to profiles $S_d$ and the one of the coherence functions $\Gamma_m$ by means of a polynomial model with sole zeros which, clearly, does not introduce poles in the output PSD and, as a consequence, does not influences the estimation of the poles of the systems and its modal vectors.
On the basis of such consideration it is possible to write:

$$S_d(\omega) = \sum_{r=0}^{n_s} \Omega_r(\omega)\sigma_r \qquad (23)$$

$$\Gamma_m(\omega) = \sum_{r=0}^{n_g} \Omega_r(\omega)\gamma_r^m \qquad (24)$$

where

- $\sigma_r$ and $n_s$ indicate the coefficients and the number of coefficients of the interpolator polynomial of the auto-PSD associated to the profiles, respectively;
- $\gamma_r$ and $n_g$ indicate the coefficients and the number of coefficients of the interpolator polynomials of the coherence functions, respectively.

On the basis of the fitting model presented in eq. (22) and by exploiting the eqs. (23) and (24), the new polynomial model of the output PSD matrix $S_q(\omega)$ becomes

$$S_q(\omega) = \frac{\overline{B}(\omega) + \sum_{l=1}^{N_L}\left(\overline{C}^l(\omega)\mathrm{e}^{+i\omega\tau_l} + \overline{D}^l(\omega)\mathrm{e}^{-i\omega\tau_l}\right)}{A(\omega)} \qquad (25)$$

Where

- $\overline{B}(\omega)$, $\overline{C}^l(\omega)$ and $\overline{D}^l(\omega) \in \mathbb{C}^{N\times N}$ represent matrices whose generic elements $\overline{B}_{ij}(\omega) = \sum_{r=0}^{n_b}\Omega_r(\omega)\overline{b}_{ijr}$, $\overline{C}_{ij}^l(\omega) = \sum_{r=0}^{n_b}\Omega_r(\omega)\overline{c}_{ijr}^l$ $\overline{D}_{ij}^l(\omega) = \sum_{r=0}^{n_b}\Omega_r(\omega)\overline{d}_{ijr}^l$ and are the numerator polynomials of the corresponding PSD, having coefficients $\overline{b}_{ijr}$, $\overline{c}_{ijr}^l$ and $\overline{d}_{ijr}^l$ respectively. It is to be underlined that, by virtue of the estimation method chosen, the coefficients $b_{\overline{ij}r}$, $\overline{c}_{ijr}^l$ and $\overline{d}_{ijr}^l$ comprise the piece of information relative to the colourization of the **inputs** and to the spatial correlation therebetween.

- $A(\omega) = \sum_{r=0}^{n_a}(i\omega)^r a_r$ is the denominator polynomial, common to all the PSDs, having coefficients $a_r$.

The determination of the unknown values of eq. (25) needs that an estimation problem is solved. Such problem can be set such that it results liner- or non-linear-in-the-parameters. According to the cases, the unknown values can be calculated by means of techniques known in literature, for example, by reducing at minimum the squared error (Least Squares approach) or maximizing the likelihood function (Maximum Likelihood approach) and, by using, where it is possible, direct solving methods (for example based on the inversion of a known regression matrix) or iterative methods (for example based on the Newton-Raphson or Levenberg-Marquardt resolution algorithms).

**A.2)** estimation of poles $\lambda_n$ and modal vectors $\psi_n$ by determining the eigen-values and aeigen-vectors of the companion matrix associated to the characteristic polynomial of eq. (25).

Once the coefficients of the numerator and denominator polynomials of eq. (25) are estimated it is possible to convert the polynomial model in a standard representation in the State Space, by constructing the companion matrix of the characteristic polynomial $A(\omega)$. Independently of the representation used, said matrix corresponds to the state matrix, whose eigen-values are the system poles Àn by definition. Instead, the eigen-vectors associated to such matrix can assume various physical meanings according to the standard form used. Therefore, the representation in State Space has to be chosen such that the modal vectors $\psi_n$ correspond to such eigen-vectors.

*Step B: estimation of the operational vectors and characteristic parameters of road/rail*

During step B, as above described, the operational vectors and the characteristic parameters of road/railway are obtained. The step B comprises the following steps:

**B.1)** description of the auto-PSD associated to profiles $S_d(\omega)$ and, if present, of the coherence functions $\Gamma_m(\omega)$, by means of a suitably chosen parametric model.

To such end, the polynomial models with sole zeros introduced in eqs. (23) and (24) can be used, anyway their use implies the presence of a high number of unknown parameters to be estimated. On the contrary, the models proposed at the state of the art of the present description offer the advantage that they are characterized by a very much smaller number of parameters and result well corresponding to the typical patterns observed in the experimental measurements. To carry out such simplification, as a way of example, the models proposed by Sussman (eq. (10)) and Bogsjö (eq. (13)) in the time frequency domain $\omega$ are considered.

**B.2)** Estimation of the operational vectors $\alpha_n^m$, $\beta_n^{ml}$ and $\chi_n^{ml}$ of the parameters of the auto-PSD associated to profiles $S_d(\omega)$ and, if required, of the parameters of the coherence functions $\Gamma_m(\omega)$, on the basis of the decomposition in simple fractions of one or more functions of the output PSD matrix $S_q(\omega)$, according to the following eqs. (26) to (34).

Starting from the decomposition in simple fractions of the output PSD matrix $S_q(\omega)$ (Eq. (20)) the generic auto-

PSD $S_{q_i}(\omega)$ can be expressed as:

$$S_{q_i}(\omega) = \sum_{n=1}^{2N} \frac{\varphi_{in}(\omega)\psi_{in}}{\Omega_1(\omega) - \lambda_n} + \frac{\psi_{in}\varphi_{in}(-\omega)}{\Omega_1(-\omega) - \lambda_n} \tag{26}$$

Where the i-th components of the operational vectors dependent on the frequency $\varphi_{in}(\omega)$ are given by:

$$\varphi_{in}(\omega) = S_d(\omega) \sum_{m=0}^{N_W} \Gamma_m(\omega) \left( \alpha_{in}^m + \sum_{l=1}^{N_L} \left( \beta_{in}^{ml} e^{+i\omega\tau_l} + \chi_{in}^{ml} e^{-i\omega\tau_l} \right) \right) \text{ with } \Gamma_0(\omega) = 1 \tag{27}$$

Using the models proposed by Sussman (Eq. (10)) and Bogsjö (eq. (13)) in the time frequency domain $\omega$, eq. (27) can be re-written as:

$$\varphi_{in}(\omega) = \frac{c}{\omega^2 + \omega_0^2} \sum_{m=0}^{N_W} e^{-\frac{\mu_m W_m |\omega|}{v}} \left( \alpha_{in}^m + \sum_{l=1}^{N_L} \left( \beta_{in}^{ml} e^{+i\omega\tau_l} + \chi_{in}^{ml} e^{-i\omega\tau_l} \right) \right) \text{ with } \mu_0 W_0 = 0 \tag{28}$$

As a consequence eq. (26) becomes:

$$S_{q_i}(\omega) = \frac{c}{\omega^2 + \omega_0^2} \sum_{n=1}^{2N} \left( \sum_{m=0}^{N_W} e^{-\frac{\mu_m W_m |\omega|}{v}} \left( T_{in}(\omega)\alpha_{in}^m + \sum_{l=1}^{N_L} \left( U_{in}^l(\omega)\beta_{in}^{ml} + V_{in}^l(\omega)\chi_{in}^{ml} \right) \right) \right) \text{ with } \mu_0 W_0 = 0$$

$$\tag{29}$$

where

$$T_{in}(\omega) = \frac{\psi_{in}}{\Omega_1(\omega) - \lambda_n} + \frac{\psi_{in}}{\Omega_1(-\omega) - \lambda_n} \tag{30}$$

$$U_{in}^l(\omega) = \frac{\psi_{in} e^{+i\omega\tau_l}}{\Omega_1(\omega) - \lambda_n} + \frac{\psi_{in} e^{-i\omega\tau_l}}{\Omega_1(-\omega) - \lambda_n} \tag{31}$$

$$V_{in}^l(\omega) = \frac{\psi_{in} e^{-i\omega\tau_l}}{\Omega_1(\omega) - \lambda_n} + \frac{\psi_{in} e^{+i\omega\tau_l}}{\Omega_1(-\omega) - \lambda_n} \tag{32}$$

In particular, the unknown values in eq. (29) are:

- the i-th components of the operational vectors $\alpha_{in}^m$, $\beta_{in}^{ml}$ and $\chi_{in}^{ml}$ with $m = 0,...,N_W$, $l=1,...,N_L$, $n = 1,... , 2N$;

- the parameters c and $\omega_0$ of the auto-PSD associated to profiles $S_d(\omega)$;

- the parameters $\mu_m$ with $m=1,...,N_W$ of the coherence functions $\Gamma_m(\omega)$.

The determination of the unknown values of eq. (29) needs the solution of problem of non-linear-in-parameters estimation.

In particular, the parameters needed for the characterization of the rolling surface can be initialized by using data coming from experimental measurements or values known in literature.

It is possible to individuate three cases in which the estimation of parameters of the coherence functions $\Gamma_m(\omega)$ is not required:

Case 1: if a vehicle is in motion on a single profile, for example a motorbike, the $\Gamma_m(\omega)$ are not present;

case 2: if a vehicle is in motion on perfectly coincident profiles, the coherence functions are known and assume all a value equal to 1;

case 3: if a vehicle is in motion on completely different profiles, the coherence functions are known and assume all a value equal to 0.

In all the three cases, the determination of the unknown values can be obtained by using the following relation, derived starting from eq. (29):

$$S_{q_i}(\omega) = \frac{c}{\omega^2 + \omega_0^2} \sum_{n=1}^{2N} \left( T_{in}(\omega) \alpha_{in} + \sum_{l=1}^{N_L} \left( U_{in}^l(\omega) \beta_{in}^l + V_{in}^l(\omega) \chi_{in}^l \right) \right) \tag{33}$$

In particular, the unknown values of eq. (33) are:

- the i-th components of the operational vectors $\alpha_{in}$, $\beta_{in}^l$ and $\chi_{in}^l$ with $l = 1,...,N_L$, $n = 1,..., 2N$

- the parameters c and $\omega_0$ of the auto-PSD associated to profiles $S_d(\omega)$.

Unlike eq. (29), the determination of the unknown values of eq. (33) can be carried out by solving a problem of linear-in-parameters estimation.

The estimation of the remaining components of the operational vectors $\alpha_n$, $\beta_n^l$ and $\chi_n^l$ in the case in which the coherence functions are not required, or $\alpha_n^m$, $\beta_n^{ml}$, and $\chi_n^{ml}$ in the opposite case, can be obtained by following the same procedure previously described, in the present section, and by considering the partial fraction decomposition of the generic output cross-PSD $S_{q_iq_j}(\omega)$

$$S_{q_iq_j}(\omega) = \sum_{n=1}^{2N} \frac{\varphi_{in}(\omega)\psi_{jn}}{\Omega_1(\omega) - \lambda_n} + \frac{\psi_{in}\varphi_{jn}(-\omega)}{\Omega_1(-\omega) - \lambda_n} \tag{34}$$

In such case, the only unknown values to be estimated in eq. (34) will be the *i*-th components of the operational vectors $\alpha_{jn}$, $\beta_{jn}^l$ and $\chi_{jn}^l$ with $l = 1,..., N_L$, $n = 1,..., 2N$, or $\alpha_{jn}^m$, $\beta_{jn}^{ml}$ and $\chi_{jn}^{ml}$ with $m=0,..., N_W$, $l=1,..., N_L$ and $n = 1,..., 2N$.

## NUMERICAL EXAMPLE

To show the performance of the procedure of identification, object of the present invention, in the following a numerical example of identification of a vehicle system is described, with concentrated parameters, with 7 degrees of freedom (DOFS, degree of freedom), represented in fig. (2). The motion of a vehicle with geometrical features and known modal parameters on a surface which respects the hypothesis of the method according to the present invention was simulated in a suitable computing field. The model used allows to describe the **rigid body modes** of the suspended mass (the chassis), i.e. heave, pitch and roll, and **rigid body modes** of the non-suspended masses (the wheels), i.e. vertical shaking and roll motions of front and rear axles. The natural frequencies $f_n = \omega_n/2\pi$ (Hz) and the damping factors $\zeta_n$ (%) are reported in the following table:

| Mode | $f_n$ (Hz) | $\zeta_n$ (%) | Description |
|---|---|---|---|
| 1 | 1.064 | 27.954 | *Heave* |
| 2 | 1.221 | 32.189 | *Roll* |
| 3 | 1.295 | 34.295 | *Pitch* |
| 4 | 8.044 | 26.031 | *rear axle hop* |
| 5 | 8.129 | 27.794 | *front axle roll* |
| 6 | 8.134 | 28.372 | *front axle hop* |
| 7 | 8.207 | 25.354 | *rear axle roll* |

The vehicle has a known geometry, with only one trackwidth $W_1$ = 1.49 m and only one wheelbase $L_1$ = 2.66 m, and it is supposed that it is in motion at constant speed v = 60 km/h on an homogeneous and Gaussian surface (see hypotheses 3 to 6).

The **rigid body modes** have been captured by using a layout of virtual **displacement** sensors, arranged along the vertical directions in the 3 angles of the suspended mass ($z_{s_1}$, $z_{s_2}$ and $z_{s_3}$) and on each one of the 4 non-suspended masses ($z_{u_1}$, $z_{u_2}$, $z_{u_3}$ and $z_{u_4}$): the time series of data relative to these seven **displacement** sensors are the only data used as input for the method of identification. The same data, as described in the following, have been analysed with a traditional OMA technique (LSCF) and with the method according to the present invention.

In this example to describe the **inputs** produced by the interaction between wheels and rolling profiles, by means of eq. (16), there are needed;

- only one coherence function $\Gamma_1(\omega)$, computed between the profiles $d_1$ and $d_2$, on which the wheels of right and left side roll, respectively;
- only one lag $\tau_1$ = 0.16 $_s$.

Such **inputs** are simulated by using as parametric models the ones proposed by Sussman (eq. (10)) for the auto-PSD associated to profiles $S_d(\omega)$, and by Bogsjö (eq. (13)) for the coherence function $\Gamma_1(\omega)$. The parameters used are collected in the following table:

| Sussman Model | | Bogsjö Model |
|---|---|---|
| $c$ (m$^2$rad/s) | $\omega_0$ (rad/s) | $\mu_1$ |
| 0.122 | 1.96 | 3.80 |

Finally, the output signals are computed in terms of auto- and cross-PSD by means of the **input**-output relation of eq. (17).

To underline the problems deriving from the use of the usual algorithms of classic OMA, i.e. based on the NExT hypotheses (eqs. (5), (6) and (7)), the same output signals are processed by means of the LSCF estimator and the respective results are compared with the ones obtained by using the algorithm, object of the present invention.

In the modal testing, the stabilization analysis is often used to assist the analyst in the choice of the physical poles of the system. The presence of spurious poles, in fact, can influence the process of estimation more or less strongly. Their presence can be attributed to various causes, for example the noise in the data, modelling errors and computational problems. The physical poles, instead, tend to be stabilized when the estimation is carried out with various polynomial orders.

A graphical tool, called stabilization diagram, allows to visualize the modal parameters estimated with increasing orders of the polynomial. The natural frequencies are represented on the axis of abscissae while the various orders are reported on the axis of ordinates. The analyst sets the tolerance thresholds which define the stabilization on the natural frequency, on the damping factor and on the value of the Modal Assurance Criterion (MAC). The various situations are represented with different symbols: the o indicates the failed stabilization of the natural frequency, the f represents the stabilization of the natural frequency, the d and v represent the extra stabilization on the damping factor and modal vector, the s refers to the wholly stabilized solutions.

In figs. (3.a) and (3.b) the stabilization diagrams are reported, obtained by using the proposed procedure of identification (eq. (25)) and the LSCF algorithm, respectively. The curve on the background refers to the auto-PSD calculated starting from the **displacements** detected by the sensor arranged on the frontal right part of the suspended mass ($z_{s_1}$ in fig. (2)). It is to be noted how the solutions produced by the LSCF algorithm tend to not stabilize even to high polynomial orders, thus producing also a remarkable quantity of poles/spurious modes. The proposed procedure of identification instead, provides a very clear stabilization diagram, where the columns of wholly stabilized solutions and corresponding to the 7 poles/physical modes of the system appear clear. The natural frequencies $f_n$ (Hz), the damping factors $\zeta_n$ (%) obtained by using a polynomial order equal to 40, are given in the following table:

| Mode | $f_n$ (Hz) | $\zeta_n$ (%) |
|---|---|---|
| 1 | 1.064 | 27.862 |
| 2 | 1.222 | 32.189 |
| 3 | 1.294 | 34.319 |
| 4 | 8.044 | 26.031 |
| 5 | 8.129 | 27.794 |
| 6 | 8.134 | 28.368 |
| 7 | 8.207 | 25.354 |

From the analysis of the above introduced tables it can be noted how the estimations provided by the proposed procedure of identification agree perfectly with the exact values both in terms of natural frequencies and damping factors.

In this contest, MAC can be used to compare the modal vectors ($\psi_n$) estimated with the exact ones. In particular, such matrix allows to quantify the resemblance between modal vectors of sets of various modes, by varying from 1, whole correlation, to 0, exact orthogonality. Therefore the ideal solution is the one in which MAC coincides with the so-called auto-MAC obtained by comparing modal vectors belonging to the same set of modes with themselves. The matrix of auto-MAC referred to the exact modal vectors of the vehicle system of fig. (2) is reported in the following:

| | | Exact Modal Vectors | | | | | | |
|---|---|---|---|---|---|---|---|---|
| | | 1 | 2 | 3 | 4 | 5 | 6 | 7 |
| Exa | 1 | 1.000 | 0.011 | 0.019 | 0.001 | 0.000 | 0.021 | 0.000 |
| | 2 | 0.011 | 1.000 | 0.291 | 0.003 | 0.024 | 0.000 | 0.007 |
| | 3 | 0.019 | 0.291 | 1.000 | 0.032 | 0.002 | 0.003 | 0.001 |
| | 4 | 0.001 | 0.003 | 0.032 | 1.000 | 0.000 | 0.030 | 0.000 |
| | 5 | 0.000 | 0.024 | 0.002 | 0.000 | 1.000 | 0.000 | 0.365 |
| | 6 | 0.021 | 0.000 | 0.003 | 0.030 | 0.000 | 1.000 | 0.000 |
| | 7 | 0.000 | 0.007 | 0.001 | 0.000 | 0.365 | 0.000 | 1.000 |

While MAC computed between the estimated and exact modal vectors is:

| | | Estimated Modal Vectors | | | | | | |
|---|---|---|---|---|---|---|---|---|
| | | 1 | 2 | 3 | 4 | 5 | 6 | 7 |
| Exact Modal Vectors | 1 | 1.000 | 0.011 | 0.018 | 0.001 | 0.000 | 0.021 | 0.000 |
| | 2 | 0.011 | 1.000 | 0.291 | 0.003 | 0.024 | 0.000 | 0.007 |
| | 3 | 0.019 | 0.291 | 1.000 | 0.032 | 0.002 | 0.003 | 0.001 |
| | 4 | 0.001 | 0.003 | 0.032 | 1.000 | 0.000 | 0.030 | 0.000 |
| | 5 | 0.000 | 0.024 | 0.002 | 0.000 | 1.000 | 0.000 | 0.365 |
| | 6 | 0.021 | 0.000 | 0.003 | 0.027 | 0.000 | 0.999 | 0.000 |
| | 7 | 0.000 | 0.007 | 0.001 | 0.000 | 0.365 | 0.000 | 1.000 |

The MAC obtained by the proposed procedure of identification is very close to the ideal situation, thus showing the exactness of the estimated modal vectors.

To complete the estimation of the modal parameters it is now needed to determine the operational vectors ( $\alpha_n^m$ , $\beta_n^{ml}$ and $\chi_n^{ml}$ ) . To such aim, by means of eqs. (26) to (33) it is to be computed firstly the coefficients associated to the parametric models of the auto-PSD associated to profiles $S_d(\omega)$ and of the coherence function $\Gamma_1(\omega)$ . The results, reported in the following table, show an optimum correspondence to the exact values, used to model the **inputs** produced by the interaction of the wheels with the rolling profiles:

| Sussman Model | | Bogsjö Model |
|---|---|---|
| $c$ (m$^2$rad/s) | $\omega_0$ (rad/s) | $\mu_1$ |
| 0.119 | 1.96 | 3.64 |

At this point, it is possible to determine all the components of the operational vectors, referring time by time to an output auto- or cross-PSD and using eqs. (26) or (34). Again, MAC can be used to compare the estimated operational vectors with the exact ones. For briefness, the matrix of the auto-MAC reported in the following refers to a sub-set of the exact operational vectors of the vehicle system of fig. (2):

| | | Ex. Op. Vects. | | | | | | |
|---|---|---|---|---|---|---|---|---|
| | | 1 | 2 | 3 | 4 | 5 | 6 | 7 |
| Ex. Op. Vects. | 1 | 1.000 | 0.002 | 0.009 | 0.028 | 0.000 | 0.491 | 0.000 |
| | 2 | 0.002 | 1.000 | 0.046 | 0.001 | 0.502 | 0.000 | 0.140 |
| | 3 | 0.009 | 0.046 | 1.000 | 0.664 | 0.001 | 0.059 | 0.000 |
| | 4 | 0.028 | 0.001 | 0.664 | 1.000 | 0.000 | 0.030 | 0.000 |
| | 5 | 0.000 | 0.502 | 0.001 | 0.000 | 1.000 | 0.000 | 0.366 |
| | 6 | 0.491 | 0.000 | 0.059 | 0.030 | 0.000 | 1.000 | 0.000 |
| | 7 | 0.000 | 0.140 | 0.000 | 0.000 | 0.366 | 0.000 | 1.000 |

While MAC computed between the estimated and the exact operational values is:

| | | Estimated Op. Vects. | | | | | | |
|---|---|---|---|---|---|---|---|---|
| | | 1 | 2 | 3 | 4 | 5 | 6 | 7 |
| Ex. Op. Vects. | 1 | 1.000 | 0.002 | 0.009 | 0.031 | 0.000 | 0.499 | 0.000 |
| | 2 | 0.002 | 1.000 | 0.046 | 0.001 | 0.536 | 0.000 | 0.149 |
| | 3 | 0.009 | 0.048 | 1.000 | 0.680 | 0.001 | 0.064 | 0.000 |
| | 4 | 0.030 | 0.001 | 0.683 | 1.000 | 0.000 | 0.032 | 0.000 |
| | 5 | 0.000 | 0.530 | 0.001 | 0.000 | 1.000 | 0.000 | 0.393 |
| | 6 | 0.520 | 0.000 | 0.062 | 0.032 | 0.000 | 0.991 | 0.000 |
| | 7 | 0.002 | 0.146 | 0.110 | 0.010 | 0.372 | 0.000 | 1.000 |

Again, the MAC obtained from the proposed procedure of identification is very close to the ideal situation, thus showing the exactness of the estimated operational vectors.

Once estimated all the operational modal parameters and the coefficients associated to the parametric models of the auto-PSD associated to profiles $S_d(\omega)$ and of the coherence function $\Gamma_1(\omega)$ it is possible to synthesize the output auto- and cross-PSD and to carry out a comparison with the non-parametric estimations of the same. This last step is very interesting because it offers the analyst the possibility to validate the results obtained. An example of such comparison is shown in fig. (4), where the auto-PSD is reported, computed starting from the **displacements** detected by the sensor arranged on the right frontal non-suspended mass ($z_{u_1}$ in fig. (2)). The perfect superimposition between the two curves confirms further the goodness of the results obtained from the proposed procedure of identification.

## ACRONYMS

FRF: Frequency Response Function

IFT: Inverse Fourier Transform
LSCF: Least Squares Complex Frequency
MAC: Modal Assurance Criterion
NExT: Natural Excitation Technique
OMA: Operational Modal Analysis
PSD: Power Spectral Density

**LIST OF SYMBOLS**

$\alpha_n^m$, $\beta_n^{ml}$ and $\chi_n^{ml} \in \mathbb{C}^{N \times 1}$ = operational vectors .

$\beta_{ij}(v)$ = difference between the phases associated to spectra of the two profiles $d_i(x)$ and $d_j(x)$ .

$\gamma_r$ = coefficients of the interpolator polynomials of the coherence function.

$\Gamma_{ij}(v)$ = coherence function

Àn = system poles

$\overline{\varphi}_n(\tau) \in \mathbb{C}^{N \times 1}$ = lag-dependent operational reference vectors

$\phi_n \in \mathbb{C}^{N \times 1}$ = operational reference vectors

$\phi_{in}$ and $\phi_{in}$ components of the operational vector $\phi_n$

$\psi_n \in \mathbb{C}^{N \times 1}$ = system modal vectors

$\psi_{in}$, $\psi_{jn}$ = components of the modal vector $\psi_n$

$v_0$ = spatial frequency of reference

$\tau_l = L_l / v$ = lag

$\eta_{1m+1}(\tau)$ = IFT of the coherence function $\Gamma_{1m+1}(\omega)$ computed between the profiles $d_1$ and $d_{m+1}$;

$\sigma_r$ = coefficients of the interpolator polynomial of the auto-PSD associated to the profiles;

$\Omega_r(\omega)$ = polynomial function

$A(\omega) = \sum_{r=0}^{n_a} (i\omega)^r a_r$ = polynomial of the denominator common to all the PSDs

$B(\omega) \in \mathbb{C}^{N \times N}$ = matrix of the numerator polynomials associated to the generic PSD

$d_i(x)$, $d_j(x)$ = parallel profiles along the road surface defined in function of the abscissa x

$H_{fr}(\omega) \in \mathbb{C}^{N_i \times N_t}$ = matrix of the response functions in frequency of the wheels

$L_l$ = wheelbase

$n_g$ = number of coefficients of the interpolator polynomials of the coherence functions

$n_s$ = number of the coefficients of the interpolator polynomial of the auto-PSD associated to profiles;

Nt = number of wheels

$q_i$ , $q_j$ = Output

$R_d(\tau)$ = function of the auto-correlation associated to profiles

$R_q(\tau) \in \mathbb{R}^{N \times N}$ = output correlation matrix;

$R_{qiqj}(\tau)$ = output correlation function

$S_d$ = PSD referred to the road or rail surface

$S_{d_i}(v)$, $S_{d_j}(v)$ = auto-PSD associated to profiles $d_i(x)$ and $d_j(x)$, respectively;

$S_{d_id_j}(v)$ = cross-PSD computed between profiles $d_i(x)$ and $d_j(x)$

$S_f$ = input PSD matrix

$S_q(\omega) \in \mathbb{C}^{N \times N}$ = output PSD matrix;

$S_{qiqj}(\omega)$ = Power Spectral Cross-Density

$S_r(\omega)$ = PSD matrix referred to the **displacements** induced by the surface

$T_s$ = sampling period

v = advancement speed of the vehicle

W = distance between two parallel profiles $d_i(x)$, $d_j(x)$

$W_m$ = trackwidth

**Claims**

1. Method applied to a vehicle system, the vehicle system comprising a road or rail vehicle provided with at least two wheels and having a geometry described by $N_W$ trackwidths $W_m$, wherein $m$ is a positive integer running from 1 to $N_W$ and $N_L$ wheelbases $L_l$ wherein $l$ is a positive integer running from 1 to $N_L$, $N_W$ and $N_L$ being pre-defined positive integers, the vehicle being driven at constant speed $V$ on road or rail profiles, the method being adapted for the estimation of poles ($\lambda_n$), modal vectors ($\psi_n$) and operational vectors $(\alpha_n^m,\ \beta_n^{ml},\ \chi_n^{ml})$ by means of analysis of the displacements or velocities or accelerations (outputs of the system) acquired in assigned measuring points of said vehicle,

   wherein loads, termed "inputs", exerted by the road or rail surface on said vehicle, have amplitudes which decrease with time frequency and wherein said inputs are correlated with respect to each other in time and/or space,
   **characterized in that** the method comprises the steps of:

   - Calculating the matrix ($S_q(\omega)$) of the power spectral densities PSDs in the $\omega$ frequency domain of acquired measurements of displacements and/or velocities and/or accelerations from corresponding sensors in assigned measuring points of said road or rail vehicle, as:

$$S_q(\omega) = \sum_{n=1}^{2N} \frac{\varphi_n(\omega)\psi_n^T}{i\omega - \lambda_n} + \frac{\psi_n\varphi_n^T(-\omega)}{-i\omega - \lambda_n}$$

   Wherein $\psi_n^T$ is the transpose of modal vector $\psi_n$, the terms $\varphi_n(\omega) \in \mathbb{C}^{N\times 1}$ are frequency-dependent operational reference vectors and are defined as:

$$\varphi_n(\omega) = S_d(\omega)\left(\sum_{m=0}^{N_W}\Gamma_m(\omega)\left(\alpha_n^m + \sum_{l=1}^{N_L}\beta_n^{ml}e^{+i\omega\tau_l} + \chi_n^{ml}e^{-i\omega\tau_l}\right)\right) \text{ with } \Gamma_0(\omega) = 1$$

   Wherein $S_d(\omega)$ is the auto-PSD associated to the road or rail profiles, $\varphi_n^T$ being the transpose of $\varphi_n$, which, in turn, is re-written as ratio between polynomial functions:

$$S_q(\omega) = \frac{S_d(\omega)\left(\sum_{m=0}^{N_W}\Gamma_m(\omega)\left(B^m(\omega) + \sum_{l=1}^{N_L}\left(C^{ml}(\omega)e^{+i\omega\tau_l} + D^{ml}(\omega)e^{-i\omega\tau_l}\right)\right)\right)}{A(\omega)} \text{ with } \Gamma_0(\omega) = 1$$

   Wherein:

   - $B^m(\omega)$, $C^{ml}(\omega)$ and $D^{ml}(\omega) \in \mathbb{C}^{N\times N}$ are matrices whose generic elements

$$B_{ij}^m(\omega) = \sum_{r=0}^{n_b}(i\omega)^r b_{ijr}^m, \qquad C_{ij}^{ml}(\omega) = \sum_{r=0}^{n_b}(i\omega)^r c_{ijr}^{ml} \quad D_{ij}^{ml}(\omega) = \sum_{r=0}^{n_b}(i\omega)^r d_{ijr}^{ml}$$
   and are polynomials

   with coefficients $b_{ijr}^m$, $c_{ijr}^{ml}$ and $d_{ijr}^{ml}$, respectively; the polynomials $B_{ij}^m(\omega)$, $C_{ij}^{ml}(\omega)$ and $D_{ij}^{ml}(\omega)$ being here termed "fitting polynomials";

   - $A(\omega) = \sum_{r=0}^{n_a}(i\omega)^r a_r$ is also a fitting polynomial with coefficients $a_r$, and whose roots are the system poles;
   - $n_b$ and $n_a$ are the number of coefficients of numerator and denominator polynomials, respectively;
   - $\Gamma_m(\omega)$ is a coherence function for trackwidth $W_m$ as defined by two parallel profiles $d_i(x)$ and $d_j(x)$ of said

road or rail profiles that are functions of the spatial abscissa $x$, and given by the following formula with the substitution $v = \omega / V$;

$$\Gamma_m(v) = \frac{\left| S_{d_i d_j}(v) \right|}{\sqrt{S_{d_i}(v) S_{d_j}(v)}}$$

Wherein $S_{d_i}(v)$ and $S_{d_j}(v)$ are respectively the auto-PSDs associated to the parallel profiles $d_i(x)$ and $d_j(x)$, while $S_{d_i d_j}(v)$ is the cross-PSD computed between the parallel profiles $d_i(x)$ and $d_j(x)$ ;

-

$$S_d(\omega) = S_d(v = \omega / V) / V;$$

and
- $N$ is the number of degrees of freedom and $\tau_l = L_l / V$;

Wherein the fitting polynomials $A(\omega)$, $B_{ij}^m(\omega)$, $C_{ij}^{ml}(\omega)$ and $D_{ij}^{ml}(\omega)$ are calculated by fitting them to the values of said outputs and obtaining corresponding fitted polynomials, and wherein the poles ($\lambda_n$), modal vectors ($\psi_n$) and operational vectors $(\alpha_n^m, \beta_n^{ml}, \chi_n^{ml})$ are calculated from the fitted polynomials.

2. Method according to claim 1, further comprising the steps of:

- defining a polynomial model descriptive of the output PSD matrix ($\boldsymbol{S}_q(\omega)$), said polynomial model comprising complex exponential terms including the effects on said system outputs of the time correlation existing between the inputs applied to wheels of the at least two wheels, which have rail or road profile in common and are arranged on different axles of the road or rail vehicle;
- carrying out a fitting procedure to determine the coefficients of said polynomial model starting from said system outputs;
- determining said poles $\lambda_n$ and modal vectors $\psi_n$ by determining eigen-values and eigen-vectors of the companion matrix associated to the characteristic polynomial relative to said polynomial model.

3. Method according to claim 2, wherein:

$$S_q(\omega) = \frac{\overline{B}(\omega) + \sum_{l=1}^{N_L} \left( \overline{C}^l(\omega) e^{+i\omega\tau_l} + \overline{D}^l(\omega) e^{-i\omega\tau_l} \right)}{A(\omega)}$$

Where:

- $\overline{B}(\omega)$, $\overline{C}^l(\omega)$ and $\overline{D}^l(\omega) \in \mathbb{C}^{N \times N}$ are matrices whose generic elements $\overline{B}_{ij}(\omega) = \sum_{r=0}^{n_b} \Omega_r(\omega) \overline{b}_{ijr}$, $\overline{C}_{ij}^l(\omega) = \sum_{r=0}^{n_b} \Omega_r(\omega) \overline{c}_{ijr}^l$ and $\overline{D}_{ij}^l(\omega) = \sum_{r=0}^{n_b} \Omega_r(\omega) \overline{d}_{ijr}^l$ are the numerator polynomials of the corresponding PSD, having coefficients $\overline{b}_{ijr}$, $\overline{c}_{ijr}^l$ and $\overline{d}_{ijr}^l$ respectively; and
- $\Omega_r(\omega)$ is a polynomial function.

4. Method according to any claim 1 to 3, wherein:

- the auto-PSD associated to rail or road profiles ($S_d(\omega)$) is expressed by means of a parametric model with coefficients, and

- the coefficients of said parametric model of the auto-PSD associated to said road or rail profiles ($S_d(\omega)$) are estimated.

5. Method according to claim 4, further comprising the description of said coherence functions ($\Gamma_m(\omega)$), by means of a parametric model and the estimation of coefficients of said parametric model of the coherence functions ($\Gamma_m(\omega)$).

6. Method according to claim 5, wherein the i-th component of matrix ($S_q(\omega)$) of the power spectral densities PSDs is given by:

$$S_{q_i}(\omega) = \frac{c}{\omega^2 + \omega_0^2} \sum_{n=1}^{2N} \left( \sum_{m=0}^{N_W} e^{-\frac{\mu_m W_m |\omega|}{v}} \left( T_{in}(\omega) \alpha_{in}^m + \sum_{l=1}^{N_L} \left( U_{in}^l(\omega) \beta_{in}^{ml} + V_{in}^l(\omega) \chi_{in}^{ml} \right) \right) \right)$$

Wherein $\mu_m$ is a set of parameters defining the coherence function with the Bogsjö fitting model, $\mu_0 W_0 = 0$, and:

- $\alpha_{in}^m$, $\beta_{in}^{ml}$ and $\chi_{in}^{ml}$ with $m=0,..., N_W$, $l=1,..., N_L$, $n = 1,... ,2N$ are the i-th components of the operational vectors;
- c ($m^2$rad/s) and $\omega_0$ (rad/s) are unknown values to be determined of the auto-PSD associated to profiles $S_d(\omega)$; and
- $Ti_n(\omega)$, $U^l{}_{in}(\omega)$, $V^l(\omega)$ are given by:

$$T_{in}(\omega) = \frac{\psi_{in}}{\Omega_1(\omega) - \lambda_n} + \frac{\psi_{in}}{\Omega_1(-\omega) - \lambda_n}$$

$$U_{in}^l(\omega) = \frac{\psi_{in} e^{+i\omega\tau_l}}{\Omega_1(\omega) - \lambda_n} + \frac{\psi_{in} e^{-i\omega\tau_l}}{\Omega_1(-\omega) - \lambda_n}$$

$$V_{in}^l(\omega) = \frac{\psi_{in} e^{-i\omega\tau_l}}{\Omega_1(\omega) - \lambda_n} + \frac{\psi_{in} e^{+i\omega\tau_l}}{\Omega_1(-\omega) - \lambda_n}$$

Wherein $\Omega_1(\omega)$ is the polynomial function with $r=1$, and $\psi_{in}$ are the i-th components of modal vectors ($\psi_n$).

7. Method according to claim 6, wherein the i-th component of matrix ($S_q(\omega)$) of the power spectral densities PSDs is given by:

$$S_{q_i}(\omega) = \frac{c}{\omega^2 + \omega_0^2} \sum_{n=1}^{2N} \left( T_{in}(\omega) \alpha_{in} + \sum_{l=1}^{N_L} \left( U_{in}^l(\omega) \beta_{in}^l + V_{in}^l(\omega) \chi_{in}^l \right) \right)$$

Wherein $\alpha_{in}$, $\beta_{in}^l$ and $\chi_{in}^l$ with $l=1,..., N_L$, $n = 1,... , 2N$ are the i-th components of the operational vectors.

8. Program for programmable devices containing instructions which, when carried out, realize the method for estimation of poles ($\lambda_n$), modal vectors ($\psi_n$) and operational vectors $(\alpha_n^m, \beta_n^{ml}, \chi_n^{ml})$ of a road or rail vehicle, according to any one of the preceding claims.

9. Road or rail vehicle system, comprising:

- A road or rail vehicle;
- A series of sensors positioned on said road or rail vehicle and configured to acquire and store, on an electronic support, data relative to the outputs as defined in claim 1;Electronic devices comprising a program for programmable device containing instructions which, when carried out, realize the method for estimation of poles ($\lambda_n$), modal vectors ($\psi_n$) and operational vectors $\left( \alpha_n^m, \; \beta_n^{ml} \; \chi_n^{ml} \right)$ of a road or rail vehicle, according to any one of the preceding claims 1 to 7.

**Patentansprüche**

1. Verfahren, angewendet auf ein Fahrzeugsystem, wobei das Fahrzeugsystem ein Straßen- oder Schienenfahrzeug umfasst, das mit mindestens zwei Rädern bereitgestellt ist und eine Geometrie aufweist, die durch $N_W$ Schienenbreiten $W_m$, wobei m eine positive ganze Zahl ist, die von 1 bis $N_W$ läuft, und $N_L$ Radbasen $L_l$, wobei l eine positive ganze Zahl ist, die von 1 bis $N_L$ läuft, beschrieben ist, wobei $N_W$ und $N_L$ vordefinierte positive ganze Zahlen sind, wobei das Fahrzeug mit einer konstanten Geschwindigkeit V auf Straßen- oder Schienenprofilen gefahren wird, wobei das Verfahren angepasst ist zur Schätzung von Polen ($\lambda_n$), Modalvektoren ($\psi_n$) und Operatorvektoren $(\alpha_n^m, \; \beta_n^{ml}, \; \chi_n^{ml})$ mittels Analyse der Bewegungen oder Geschwindigkeiten oder Beschleunigungen (Ausgabe des Systems) aufgenommen an zugewiesenen Messpunkten des Fahrzeuges,

wobei die Beladungen, bezeichnet "Eingaben", die durch die Straßen- oder Schienenoberfläche auf das Fahrzeug ausgeübt werden, Amplituden aufweisen, die mit der Zeitfrequenz abnimmt, und wobei die Eingaben in Bezug aufeinander in der Zeit und/oder im Raum korreliert sind,
**dadurch gekennzeichnet, dass** das Verfahren die folgenden Schritte umfasst:

- Berechnung der Matrix ($S_q(\omega)$) der Leistungsspektraldichten PSDs in der $\omega$-Frequenzdomain der von entsprechenden Sensoren in zugewiesenen Messpunkten des genannten Straßen- oder Schienenfahrzeuges aufgenommenen Messungen der Bewegungen und/oder Geschwindigkeiten und/oder Beschleunigungen, als

$$S_q(\omega) = \sum_{n=1}^{2N} \frac{\varphi_n(\omega)\psi_n^T}{i\omega - \lambda_n} + \frac{\psi_n \varphi_n^T(-\omega)}{-i\omega - \lambda_n}$$

wobei $\psi_n^T$ die Transpose des Modalvektors $\psi_n$ ist, wobei $\varphi_n(\omega) \in \mathbb{C}^{N \times 1}$ die Bezeichnungen frequenzabhängige Operatorreferenzvektoren sind und wie folgt definiert sind:

$$\varphi_n(\omega) = S_d(\omega)\left( \sum_{m=0}^{N_W} \Gamma_m(\omega)\left( \alpha_n^m + \sum_{l=1}^{N_L} \beta_n^{ml} e^{+i\omega\tau_l} + \chi_n^{ml} e^{-i\omega\tau_l} \right) \right)$$

mit $\Gamma_0(\omega) = 1$,

wobei $S_d(\omega)$ der Auto-PSD assoziiert mit den Straßen- oder Schienenprofilen ist, $\varphi_n^T$ die Transpose von $\varphi_n$ ist, welche umkehrweise als Verhältnis zwischen den Polynomfunktionen geschrieben werden:

$$S_q(\omega) = \frac{S_d(\omega)\left( \sum_{m=0}^{N_W} \Gamma_m(\omega)\left( B^m(\omega) + \sum_{l=1}^{N_L} \left( C^{ml}(\omega)e^{+i\omega\tau_l} + D^{ml}(\omega)e^{-i\omega\tau_l} \right) \right) \right)}{A(\omega)}$$

mit $\Gamma_0(\omega) = 1$,
wobei

- $\boldsymbol{B}^m(\omega)$, $\boldsymbol{C}^{ml}(\omega)$ und $\boldsymbol{D}^{ml}(\omega) \in \mathbb{C}^{N \times N}$ Matrizen sind, deren generische Elemente

$$B_{ij}^m(\omega) = \sum_{r=0}^{n_b}(i\omega)^r b_{ijr}^m, \qquad C_{ij}^{ml}(\omega) = \sum_{r=0}^{n_b}(i\omega)^r c_{ijr}^{ml} \quad \text{und} \quad D_{ij}^{ml}(\omega) = \sum_{r=0}^{n_b}(i\omega)^r d_{ijr}^{ml}$$ Polynome mit Koeffizienten $b_{ijr}^m$, $c_{ijr}^{ml}$ bzw. $d_{ijr}^{ml}$ sind; wobei die Polynome $B_{ij}^m(\omega)$, $C_{ij}^m(\omega)$ und $D_{ij}^m(\omega)$ hierin als "Fitting-Polynome" bezeichnet werden;

$$A(\omega) = \sum_{r=0}^{n_a}(i\omega)^r a_r$$

- $\qquad$ ist ebenfalls ein Fitting-Polynom mit Koeffizienten $a_r$ und deren Wurzeln die System-Pole sind;
- $n_b$ und $n_a$ sind die Anzahl von Koeffizienten von Numerator- bzw. Denominatorpolynome;
- $\Gamma_m(\omega)$ ist eine Kohärenzfunktion für Schienenbreite $W_m$ wie durch zwei parallele Profile $d_i(x)$ und $d_j(x)$ der Straßen- oder Schienenprofile definiert, die Funktionen der Raumachse x sind und durch die folgende Formel mit der Substitution $\nu = \omega / V$; gegeben sind

$$\Gamma_m(\nu) = \frac{\left| S_{d_i d_j}(\nu) \right|}{\sqrt{S_{d_i}(\nu) S_{d_j}(\nu)}} ;$$

wobei $S_{d_i}(\nu)$ und $S_{d_j}(\nu)$ die entsprechenden auto-PSDs sind, die mit den parallelen Profilen $d_i(x)$ und $d_j(x)$ assoziiert sind, während $S_{d_i d_j}(\nu)$ das Kreuz-PSD errechnet zwischen den parallelen Profilen $d_i(x)$ und $d_j(x)$ ist;

-

$$S_d(\omega) = S_d(\nu = \omega/ V) / V;$$

und

- $N$ ist die Anzahl an Freiheitsgraden und $\tau_l = L_l/V$;

wobei die Fitting-Polynome $A(\omega)$, $B_{ij}^m(\omega)$, $C_{ij}^{ml}(\omega)$, und $D_{ij}^{ml}(\omega)$ errechnet werden durch deren Fitting an die Werte der Ausgaben und Erhalten der entsprechenden Polynome, und wobei die Pole ($\lambda_n$), Modalvektoren ($\psi_n$) und Operatorvektoren ($\alpha_n^m$, $\beta_n^{ml}$, $\chi_n^{ml}$) aus den Fitting-Polynomen errechnet werden.

2. Verfahren gemäß Anspruch 1, weiterhin umfassend die Schritte:

- Definieren eines Polynommodells, das die Ausgangs-PSD-Matrix ($S_q(\omega)$) beschreibt, wobei das Polynommo-dell komplexe Exponentialterme umfasst, einschließlich die Auswirkungen der Zeitkorrelation zwischen den an auf die Räder der mindestens zwei Rädern, die Schienen- oder Straßenprofil gemeinsam haben und auf verschiedenen Achsen des Straßen- oder Schienenfahrzeugs angelegt sind, angelegten Eingaben auf die Systemausgaben;
- Durchführen eines Fitting-Verfahrens, um die Koeffizienten des Polynommodells ausgehend von den Systemausgaben zu bestimmen;
- Bestimmen der Pole $\lambda_n$ und Modalvektoren $\psi_n$ durch Bestimmen von Eigenwerten und Eigenvektoren der Begleitmatrix, die dem charakteristischen Polynom relativ zu dem Polynommodell assoziiert sind.

3. Verfahren gemäß Anspruch 2, wobei:

$$S_q(\omega) = \frac{\overline{B}(\omega) + \sum_{l=1}^{N_L}\left(\overline{C}^l(\omega)\mathrm{e}^{+\mathrm{i}\omega\tau_l} + \overline{D}^l(\omega)\mathrm{e}^{-\mathrm{i}\omega\tau_l}\right)}{A(\omega)}$$

wobei:

- $\overline{B}(\omega)$, $\overline{C}^l(\omega)$ und $\overline{D}^l(\omega) \in \mathbb{C}^{N \times N}$ Matrizen sind, deren generische Elemente $\overline{B}_{ij}(\omega) = \sum_{r=0}^{n_b} \Omega_r(\omega)\overline{b}_{ijr}$, $\overline{C}_{ij}^l(\omega) = \sum_{r=0}^{n_b} \Omega_r(\omega)\overline{c}_{ijr}^l$ und $\overline{D}_{ij}^l(\omega) = \sum_{r=0}^{n_b} \Omega_r(\omega)\overline{d}_{ijr}^l$ die Numeratorpolynome der entsprechenden PSD sind, aufweisend die Koeffizienten $b_{ijr}$, $\overline{c}_{ijr}^l$ bzw. $\overline{d}_{ijr}^l$ ; und
- $\Omega_r(\omega)$ ist eine Polynomfunktion.

4. Verfahren gemäß einem der Ansprüche 1 bis 3, wobei:

- das Auto-PSD, assoziiert mit den Schienen- oder Straßenprofilen ($S_d(\omega)$) mittels eines parametrischen Modells mit Koeffizienten ausgedrückt wird, und
- die Koeffizienten des parametrischen Modells der Auto-PSD assoziiert mit der Straßen- oder Schienenprofile ($S_d(\omega)$) geschätzt werden.

5. Verfahren gemäß Anspruch 4, weiterhin umfassend die Beschreibung der Kohärenzfunktionen ($\Gamma_m(\omega)$) mittels eines parametrischen Modells und der Bestimmung von Koeffizienten des parametrischen Modells der Kohärenzfunktionen ($\Gamma_m(\omega)$).

6. Verfahren gemäß Anspruch 5, wobei die *i*-te Komponente der Matrix ($S_q(\omega)$) der Leistungsspektraldichten PSDs gegeben ist durch:

$$S_{q_i}(\omega) = \frac{c}{\omega^2 + \omega_0^2} \sum_{n=1}^{2N}\left(\sum_{m=0}^{N_W} \mathrm{e}^{-\frac{\mu_m W_m |\omega|}{v}}\left(T_{in}(\omega)\alpha_{in}^m + \sum_{l=1}^{N_L}\left(U_{in}^l(\omega)\beta_{in}^{ml} + V_{in}^l(\omega)\chi_{in}^{ml}\right)\right)\right),$$

wobei $\mu_m$ ein Satz von Parametern ist, die die Kohärenzfunktion mit dem Bogsjö-Fitting-Modell, $\mu_0 W_0 = 0$, definieren;

- wobei $\alpha_{in}^m$, $\beta_{in}^{ml}$ und $\chi_{in}^{ml}$ mit $m=0,..., Nw, l= 1,...,N_L, n = 1,...,2N$ die *i*-ten Komponenten des Operatorvektors sind;
- c (m²rad/s) und $\omega_0$ (rad/s) sind unbekannte Werte, die von dem Auto-PSD assoziiert mit den Profilen $S_d(\omega)$ bestimmt werden müssen; und
- $T_{in}(\omega)$, $U_{in}^l(\omega)$, $V_{in}^l(\omega)$ sind gegeben durch

$$T_{in}(\omega) = \frac{\psi_{in}}{\Omega_1(\omega) - \lambda_n} + \frac{\psi_{in}}{\Omega_1(-\omega) - \lambda_n}$$

$$U_{in}^l(\omega) = \frac{\psi_{in}\mathrm{e}^{+\mathrm{i}\omega\tau_l}}{\Omega_1(\omega) - \lambda_n} + \frac{\psi_{in}\mathrm{e}^{-\mathrm{i}\omega\tau_l}}{\Omega_1(-\omega) - \lambda_n}$$

$$V_{in}^l(\omega) = \frac{\psi_{in}\mathrm{e}^{-\mathrm{i}\omega\tau_l}}{\Omega_1(\omega) - \lambda_n} + \frac{\psi_{in}\mathrm{e}^{+\mathrm{i}\omega\tau_l}}{\Omega_1(-\omega) - \lambda_n},$$

wobei $\Omega_1(\omega)$ die Polynomfunktion mit r = 1 ist und $\psi_{in}$ die *i*-ten Komponenten der Modalvektoren ($\psi_n$) sind.

**7.** Verfahren nach Anspruch 6, wobei die *i*-te Komponente der Matrix ($S_q(\omega)$) der Leistungsspektraldichten PSDs gegeben ist durch:

$$S_{q_i}(\omega) = \frac{c}{\omega^2 + \omega_0^2} \sum_{n=1}^{2N} \left( T_{in}(\omega)\alpha_{in} + \sum_{l=1}^{N_L} \left( U_{in}^l(\omega)\beta_{in}^l + V_{in}^l(\omega)\chi_{in}^l \right) \right)$$

wobei $\alpha_{in}$, $\beta_{in}^l$ und $\chi_{in}^l$ mit $l = 1,..., N_L$, $n = 1,..., 2N$ die *i*-ten Komponenten des Operatorvektors sind.

**8.** Programm für programmierbare Vorrichtungen enthaltend Weisungen, die bei Ausführung das Verfahren zur Schätzung von Polen ($\lambda_n$), Modalvektoren ($\psi_n$) und Operatorvektoren ( $\alpha_n^m$, $\beta_n^{ml}$, $\chi_n^{ml}$ ) eines Straßen- und Schienenfahrzeugs gemäß einem der vorherigen Ansprüche realisieren.

**9.** Straßen- oder Schienenfahrzeugsystem, umfassend:

- ein Straßen- oder Schienenfahrzeug;
- eine Reihe von Sensoren, die an dem Straßen- oder Schienenfahrzeug angebracht sind und so konfiguriert sind, dass sie Daten zu den Ausgängen wie in Anspruch 1 definiert erfassen und auf einem elektronischen Träger speichern; elektrische Vorrichtungen, umfassend ein Programm für eine programmierbare Vorrichtung, enthaltend Weisungen, die bei Ausführung das Verfahren zur Schätzung von Polen ($\lambda_n$), Modalvektoren ($\psi_n$) und Operatorvektoren ( $\alpha_n^m$, $\beta_n^{ml}$, $\chi_n^{ml}$ ) eines Straßen- und Schienenfahrzeugs gemäß einem der vorherigen Ansprüche 1 bis 7 realisieren.

**Revendications**

**1.** Procédé appliqué à un système de véhicule, le système de véhicule comprenant un véhicule routier ou ferroviaire pourvu d'au moins deux roues et ayant une géométrie décrite par $N_W$ des largeurs de voie $W_m$, où m représente un nombre entier positif allant de 1 à $N_W$ et $N_L$ des empattements $L_l$ où *l* est un nombre entier positif allant de 1 à $N_L$, $N_W$ et $N_L$ étant des nombres entiers positifs prédéfinis, le véhicule étant conduit à une vitesse constante *V* sur des profils routiers ou ferroviaires, le procédé étant adapté à l'estimation des pôles ($\lambda_n$), des vecteurs modaux ($\psi_n$) et des vecteurs opérationnels ( $\alpha_n^m$, $\beta_n^{ml}$, $\chi_n^{ml}$ ), au moyen de l'analyse des déplacements ou des vitesses ou des accélérations (sorties du système) acquis en des points de mesure assignés dudit véhicule,

dans lequel les charges, appelées « entrées », exercées par la surface routière ou ferroviaire sur ledit véhicule, ont des amplitudes qui diminuent avec la fréquence temporelle et dans lequel lesdites entrées sont corrélées les unes par rapport aux autres dans le temps et/ou l'espace,
**caractérisé en ce que** le procédé comprend les étapes suivantes :

- Calculer la matrice ($S_q(\omega)$) des densités spectrales de puissance (PSD) dans le domaine des fréquences $\omega$ des mesures acquises des déplacements et/ou des vitesses et/ou des accélérations à partir des capteurs correspondants dans les points de mesure assignés dudit véhicule routier ou ferroviaire, comme suit :

$$S_q(\omega) = \sum_{n=1}^{2N} \frac{\varphi_n(\omega)\psi_n^T}{i\omega - \lambda_n} + \frac{\psi_n\varphi_n^T(-\omega)}{-i\omega - \lambda_n}$$

Où $\psi_n^T$ est la transposée du vecteur modal $\psi_n$, les termes $\varphi_n(\omega) \in \mathbb{C}^{N \times 1}$ sont des vecteurs de référence opérationnels dépendant de la fréquence et sont définis comme suit :

$$\boldsymbol{\varphi}_n\left(\omega\right) = S_d\left(\omega\right)\left(\sum_{m=0}^{N_W} \Gamma_m\left(\omega\right)\left(\boldsymbol{\alpha}_n^m + \sum_{l=1}^{N_L} \boldsymbol{\beta}_n^{ml}\mathrm{e}^{+\mathrm{i}\omega\tau_l} + \boldsymbol{\chi}_n^{ml}\mathrm{e}^{-\mathrm{i}\omega\tau_l}\right)\right)$$

avec $\Gamma_0\left(\omega\right) = 1$

Dans lequel $S_d(\omega)$ est l'auto-PSD associée aux profils routiers ou ferroviaires, $\boldsymbol{\varphi}_n^T$ étant la transposée de $\varphi_n$, qui, à son tour, est réécrite comme un rapport entre des fonctions polynomiales :

$$S_q\left(\omega\right) = \frac{S_d\left(\omega\right)\left(\sum_{m=0}^{N_W} \Gamma_m\left(\omega\right)\left(\boldsymbol{B}^m\left(\omega\right) + \sum_{l=1}^{N_L}\left(\boldsymbol{C}^{ml}\left(\omega\right)\mathrm{e}^{+\mathrm{i}\omega\tau_l} + \boldsymbol{D}^{ml}\left(\omega\right)\mathrm{e}^{-\mathrm{i}\omega\tau_l}\right)\right)\right)}{A\left(\omega\right)}$$

avec $\Gamma_0\left(\omega\right) = 1$
Où

- $B^m(\omega)$, $C^{ml}(\omega)$ et $\boldsymbol{D}^{ml}\left(\omega\right) \in \mathbb{C}^{N\times l}$ sont des matrices dont les éléments génériques $B_{ij}^m\left(\omega\right) = \sum_{r=0}^{n_b}\left(\mathrm{i}\omega\right)^r b_{ijr}^m$, $C_{ij}^{ml}\left(\omega\right) = \sum_{r=0}^{n_b}\left(\mathrm{i}\omega\right)^r c_{ijr}^{ml}$ $D_{ij}^{ml}\left(\omega\right) = \sum_{r=0}^{n_b}\left(\mathrm{i}\omega\right)^r d_{ijr}^{ml}$ et sont des polynômes à coefficients $b_{ijr}^m$, $c_{ijr}^{ml}$ et $d_{ijr}^{ml}$, respectivement ; les polynômes $B_{ij}^m\left(\omega\right)$, $C_{ij}^{ml}\left(\omega\right)$ et $D_{ij}^{ml}\left(\omega\right)$ sont appelés ici « polynômes d'ajustement » ;

- $A\left(\omega\right) = \sum_{r=0}^{n_a}\left(\mathrm{i}\omega\right)^r a_r$ est également un polynôme d'ajustement à coefficients $a_r$, et dont les racines sont les pôles de système ;

- $n_b$ et $n_a$ sont les nombres de coefficients de polynômes de numérateur et de dénominateur, respectivement ;

- $\Gamma_m(\omega)$ est une fonction de cohérence pour la largeur de voie $W_m$ définie par deux profils parallèles $d_i(x)$ et $d_j(x)$ desdits profils routiers ou ferroviaires qui sont des fonctions de l'abscisse spatiale x, et donnée par la formule suivante avec la substitution $v= \omega/V$;

$$\Gamma_m\left(v\right) = \frac{\left|S_{d_i d_j}\left(v\right)\right|}{\sqrt{S_{d_i}\left(v\right)S_{d_j}\left(v\right)}}$$

où et sont $S_{d_i}\left(v\right)$ $S_{d_j}\left(v\right)$ respectivement les auto-PSD associées aux profils parallèles $d_i(x)$ et $d_j(x)$, tandis que est la $S_{d_i d_j}\left(v\right)$ cross-PSD calculée entre les profils parallèles $d_i(x)$ et $d_j(x)$ ;
-

$$S_d(\omega) = S_d(v = \omega/V) / V;$$

et

- N représente le nombre de degrés de liberté et $\tau_l = L_l/V$;

Où les polynômes d'ajustement $A(\omega)$, $B_{ij}^m\left(\omega\right)$, $C_{ij}^{ml}\left(\omega\right)$, et $D_{ij}^{ml}\left(\omega\right)$ sont calculés en les ajustant aux valeurs desdites sorties et en obtenant les polynômes ajustés correspondants, et dans lequel les pôles ($\lambda_n$), les vecteurs modaux ($\psi_n$) et les vecteurs opérationnels ( $\alpha_n^m$, $\beta_n^{ml}$, $\chi_n^{ml}$ ) sont calculés à partir des polynômes ajustés.

**2.** Procédé selon la revendication 1, comprenant en outre les étapes consistant à :

- définir un modèle polynomial décrivant la matrice PSD de sortie *(S$_q$($\omega$))*, ledit modèle polynomial comprenant des termes exponentiels complexes incluant les effets sur lesdites sorties de système de la corrélation temporelle existant entre les entrées appliquées aux roues desdites au moins deux roues, qui ont en commun un profil ferroviaire ou routier et sont disposées sur des essieux différents du véhicule routier ou ferroviaire ;
- effectuer une procédure d'ajustement pour déterminer les coefficients dudit modèle polynomial à partir desdites sorties de système ;
- déterminer lesdits pôles $\lambda_n$ et vecteurs modaux $\psi_n$ en déterminant les valeurs propres et les vecteurs propres de la matrice associée au polynôme caractéristique par rapport audit modèle polynomial.

**3.** Procédé selon la revendication 2, dans lequel :

$$S_q(\omega) = \frac{\overline{\boldsymbol{B}}(\omega) + \sum_{l=1}^{N_L}\left(\overline{\boldsymbol{C}}^l(\omega)\mathrm{e}^{+\mathrm{i}\omega\tau_l} + \overline{\boldsymbol{D}}^l(\omega)\mathrm{e}^{-\mathrm{i}\omega\tau_l}\right)}{A(\omega)}$$

où :

- $\overline{B}(\omega)$ $\overline{C}^l(\omega)$ et $\overline{\boldsymbol{D}}^l(\omega) \in \mathbb{C}^{N\times N}$ sont des matrices dont les éléments génériques

$\overline{B}_{ij}(\omega) = \sum_{r=0}^{n_b}\Omega_r(\omega)\overline{b}_{ijr}$ , $\overline{C}_{ij}^l(\omega) = \sum_{r=0}^{n_b}\Omega_r(\omega)\overline{c}_{ijr}^l$ et $\overline{D}_{ij}^l(\omega) = \sum_{r=0}^{n_b}\Omega_r(\omega)\overline{d}_{ijr}^l$ sont les polynômes de numérateur du PSD correspondant, dont les coefficients sont respectivement $\overline{b}_{ijr}$ , $\overline{c}_{ijr}^l$ et $\overline{d}_{ijr}^l$ ; et
- $\Omega_r(\omega)$ est une fonction polynomiale.

**4.** Procédé selon l'une quelconque des revendications 1 à 3, dans lequel :

- l'auto-PSD associée aux profils ferroviaires ou routiers *(S$_d$($\omega$))* est exprimée au moyen d'un modèle paramétrique à coefficients, et
- les coefficients dudit modèle paramétrique de l'auto-PSD associé à ces profils routiers ou ferroviaires *(S$_d$($\omega$))* sont estimés.

**5.** Procédé selon la revendication 4, comprenant en outre la description desdites fonctions de cohérence *($\Gamma_m$($\omega$))*, au moyen d'un modèle paramétrique et l'estimation de coefficients dudit modèle paramétrique des fonctions de cohérence *($\Gamma_m$($\omega$))*.

**6.** Procédé selon la revendication 5, dans lequel la *i-ième* composante de la matrice *(S$_q$($\omega$))* des densités spectrales de puissance PSD est donnée par :

$$S_{q_i}(\omega) = \frac{c}{\omega^2 + \omega_0^2}\sum_{n=1}^{2N}\left(\sum_{m=0}^{N_W}\mathrm{e}^{-\frac{\mu_m W_m|\omega|}{v}}\left(T_{in}(\omega)\alpha_{in}^m + \sum_{l=1}^{N_L}\left(U_{in}^l(\omega)\beta_{in}^{ml} + V_{in}^l(\omega)\chi_{in}^{ml}\right)\right)\right)$$

Où $\mu_m$ est un ensemble de paramètres définissant la fonction de cohérence avec le modèle d'ajustement de Bogsjö, $\mu_0 W_0 = 0$, et :

- $\alpha_{in}^m$ , $\beta_{in}^{ml}$ et $\chi_{in}^{ml}$ avec *m=0,..., Nw, l* = 1,...,$N_L$, *n* = 1,...,2*N* sont les *i-èmes* composantes des vecteurs opérationnels ;
- *c* (m$^2$rad/s) et $\omega_0$ (rad/s) sont des valeurs inconnues à déterminer de l'auto-PSD associée aux profils $S_d(\omega)$; et
- *T$_{in}$($\omega$), U$^l_{in}$($\omega$), V$^l_{in}$($\omega$)* sont données par :

$$T_{in}(\omega) = \frac{\psi_{in}}{\Omega_1(\omega) - \lambda_n} + \frac{\psi_{in}}{\Omega_1(-\omega) - \lambda_n}$$

$$U_{in}^l(\omega) = \frac{\psi_{in}e^{+i\omega\tau_l}}{\Omega_1(\omega) - \lambda_n} + \frac{\psi_{in}e^{-i\omega\tau_l}}{\Omega_1(-\omega) - \lambda_n}$$

$$V_{in}^l(\omega) = \frac{\psi_{in}e^{-i\omega\tau_l}}{\Omega_1(\omega) - \lambda_n} + \frac{\psi_{in}e^{+i\omega\tau_l}}{\Omega_1(-\omega) - \lambda_n}$$

Où $\Omega_1(\omega)$ est la fonction polynomiale avec $r=1$, et $\psi_{in}$ sont les *i-èmes* composantes des vecteurs modaux ($\psi_n$).

7. Procédé selon la revendication 6, dans lequel la *i-ème* composante de la matrice ($Sq(\omega)$) des densités spectrales de puissance PSD est donnée par :

$$S_{q_i}(\omega) = \frac{c}{\omega^2 + \omega_0^2} \sum_{n=1}^{2N} \left( T_{in}(\omega)\alpha_{in} + \sum_{l=1}^{N_L} \left( U_{in}^l(\omega)\beta_{in}^l + V_{in}^l(\omega)\chi_{in}^l \right) \right)$$

Où $\alpha_{in}$, $\beta_{in}^l$ et $\chi_{in}^l$ avec $l = 1,..., N_L$, $n = 1,..., 2N$ sont les *i-èmes* composantes des vecteurs opérationnels.

8. Programme pour dispositifs programmables contenant des instructions qui, lorsqu'elles sont exécutées, réalisent le procédé d'estimation des pôles ($\lambda_n$), des vecteurs modaux ($\psi_n$) et des vecteurs opérationnels ($\alpha_n^m$, $\beta_n^{ml}$, $\chi_n^{ml}$) d'un véhicule routier ou ferroviaire, selon l'une quelconque des revendications précédentes.

9. Système de véhicule routier ou ferroviaire comprenant :

- Un véhicule routier ou ferroviaire ;
- Une série de capteurs positionnés sur ledit véhicule routier ou ferroviaire et configurés pour acquérir et stocker, sur un support électronique, des données relatives aux sorties telles que définies dans la revendication 1;
Dispositifs électroniques comprenant un programme pour dispositif programmable contenant des instructions qui, lorsqu'elles sont exécutées, réalisent le procédé de l'estimation de pôles ($\lambda_n$), de vecteurs modaux ($\psi_n$) et de vecteurs opérationnels ($\alpha_n^m$, $\beta_n^{ml}$, $\chi_n^{ml}$) d'un véhicule routier ou ferroviaire, selon l'une quelconque des revendications précédentes 1 à 7.

Fig. 1

Fig. 2

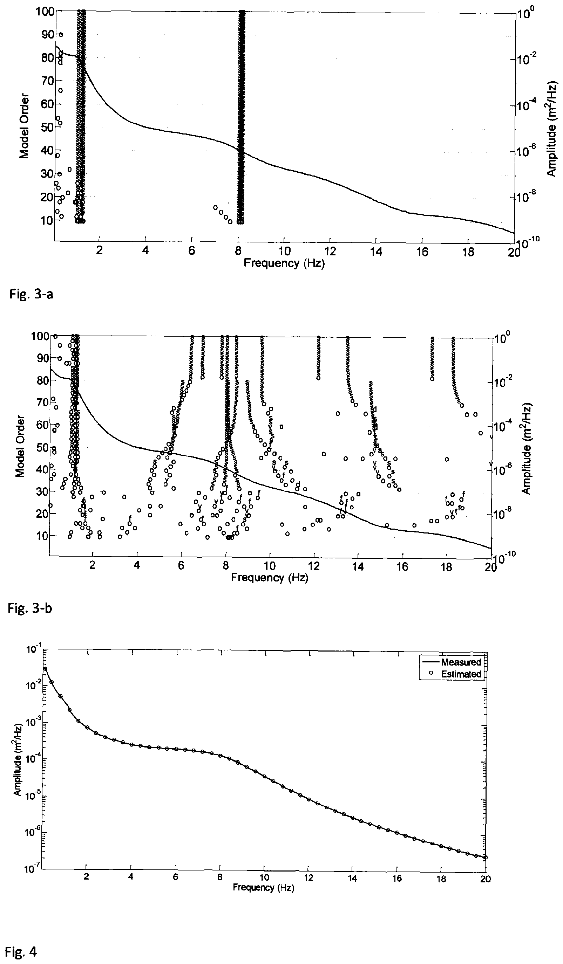

Fig. 3-a

Fig. 3-b

Fig. 4

**A** | ESTIMATION OF THE POLES AND MODAL VECTORS

**B** | ESTIMATION OF THE OPERATIONAL VECTORS AND PARAMETERS CHARACTERISTIC OF ROAD OR RAILWAY

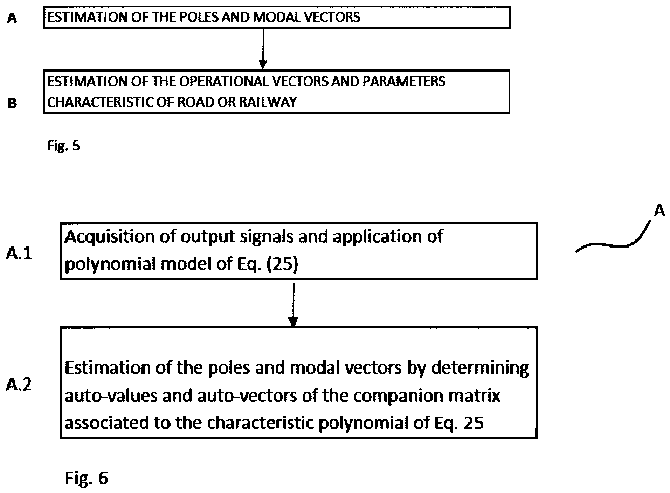

Fig. 5

**A.1** | Acquisition of output signals and application of polynomial model of Eq. (25)

A

**A.2** | Estimation of the poles and modal vectors by determining auto-values and auto-vectors of the companion matrix associated to the characteristic polynomial of Eq. 25

Fig. 6

A.2.1 | Computing the companion matrix of the characteristic polynomial of Eq. 25

A.2

A.2.2 | Estimation of the poles $\lambda_n$ by computing the auto-values of the companion matrix computed at point A.2.1

A.2.3 | Estimation of the modal vectors $\psi_n$ by computing the auto-vectors of the companion matrix computed at point A.2.1

B.1 | Description of the auto-PSD associated to road profiles and, if present, of the coherence functions, by means of parametric models

B

B.2 | Estimation of the operational vectors $\alpha_n^m$, $\beta_n^{ml}$, $\chi_n^{ml}$, of the parameters of the auto-PSD associated to the road profiles and, if present, of the parameters of the coherence functions $S_q(\omega)$ on the basis of the decomposition in simple fractions of one or more functions of the output PSD matrix computed at point A.1

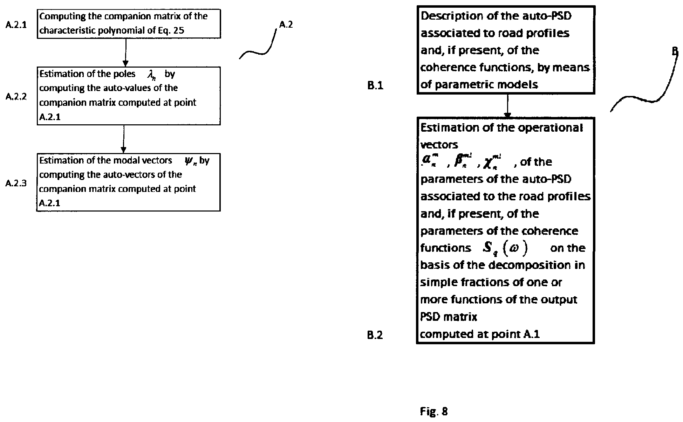

Fig. 8

**REFERENCES CITED IN THE DESCRIPTION**

**Patent documents cited in the description**

- WO 0133182 A1
- WO 2008002310 A1
- WO 2014006176 A1
- US 2014257629 A1
- US 2014204205 A1
- US 799988 B2
- US 8905359 B2
- US 8942426 B2
- DE 10257793 A1
- EP 1600755 A1
- US 5614670 A
- EP 0971217 A2
- WO 2007009460 A1